# EUROPEAN PATENT SPECIFICATION

(11) **EP 1 697 139 B1**
(45) Date of publication and mention of the grant of the patent: **29.04.2015**
(21) Application number: 04807842.2
(22) Date of filing: 20.12.2004
(51) Int. Cl.: G06K 15/02

(54) **IMAGE-PROCESSING METHOD AND APPARATUS, AND IMAGE-FORMING APPARATUS**
BILDVERARBEITUNGSVERFAHREN UND -VORRICHTUNG UND BILDERZEUGUNGSVORRICHTUNG
PROCEDE ET DISPOSITIF DE TRAITEMENT D'IMAGE, ET DISPOSITIF DE FORMATION D'IMAGE

(30) Priority: 26.12.2003 JP 2003434867
(43) Date of publication of application: 06.09.2006
(73) Proprietor: Ricoh Company, Ltd., Tokyo 143-8555 (JP)
(72) Inventor: NAKANO, Naoki, Yokohama-shi Kanagawa 2260027 (JP); KIMURA, Takashi, Kawasaki-shi Kanagawa 2150003 (JP); HIRANO, Masanori, Kanagawa 2430203 (JP)
(74) Representative: Leeming, John Gerard
(86) International application number: PCT/JP2004/019487
(87) International publication number: WO 2005/063490

(56) References cited:
- JP-A- 11 005 298
- JP-A- 2003 334 938
- US-A- 5 029 108
- US-A- 5 617 130
- US-A- 6 021 256
- US-A- 6 144 461

## Description

### TECHNICAL FIELD

The present invention generally relates to an image-processing method and apparatus and an image-forming apparatus, and more particularly to an image-processing method and apparatus and an image-forming apparatus for performing image formation through the ink-jet printing method.

### BACKGROUND ART

Conventionally, the ink-jet printing has been used because high-speed printing is possible without requiring special fixing processing for the plain paper, and the noise occurring at the time of printing is sufficiently low. The attention to the ink-jet printing is attracted for the use in office automation devices.

There have been proposed various conventional methods of ink-jet printing, or some are already commercially produced and used. According to such ink-jet printing method, the ink-jet head is used in which the ink liquid chamber and the nozzle having a passage open to the chamber are formed, and the pressure is applied to the ink in the ink liquid chamber according to image information, so that the small ink drop is discharged from the nozzle to the printing medium, such as paper or film, in order to form an image.

Moreover, there are the serial ink-jet printer and the line ink-jet printer classified according to the head composition. In the serial ink-jet printer, the ink-jet head is scanned the width direction of paper (main scanning) and the paper is transported after one or more scanning lines are made to form the following printing line.

On the other hand, in the line ink-jet printer, the nozzle is formed to cover mostly the width of paper, and the paper is transported to perform the printing without scanning the ink-jet head in the width direction of paper. This printer is advantageous in that one printing line in the width direction of paper is formed at once and the printing speed is high. However, the size of the whole printer becomes large since the head itself becomes large. And, in order to perform printing at a high resolution, it is required to make the arrangement of the nozzle itself I a high-density arrangement, and there is the problem that the manufacture cost of the head becomes high.

In contrast to the line ink-jet printer, the serial in-jet printer forms the image with the comparatively small head, and it is advantageous in that the cost of the printer device can be low, and many serial type ink-jet printers are put in practical use currently.

In the case of the serial type ink-jet printer, the printing speed varies depending on the resolution of the image, the nozzle density, the drive frequency that forms the dot, the feed velocity, etc.

Among them, the nozzle density has a restriction of the machining accuracy of the nozzle, the liquid chamber, the passage, and the actuator. Especially, in order to carry out division formation at the channel corresponding to the nozzle in the case of the ink jet method using the piezoelectric element, there is only the method of using formation of the thin film (piezoelectric element PZT) by printing or the mechanical machining of dicing etc.

Compared with the bubble jet (R) method (or thermal ink jet method) formed according to the semiconductor process, the nozzle density of the ink jet method becomes low. The maximum of the nozzle density of the ink-jet head using the piezoelectric element is currently about 360 dpi.

By the way, in order to increase the printing speed, using the stroke which forms the printing region by one scanning is desirable. For example, when forming an image with the resolution of 300dpi in the sub-scanning direction using the head with the nozzle density of 300dpi, it is possible to create the image with one scanning of the head being made in the main scanning direction (which is called the non-interlaced method). When forming an image with the resolution of 600dpi using the head with the nozzle density of 300dpi, it is necessary to make two main scannings and one sub-scanning (paper feeding), which is called the interlaced method. The printing speed of the non-interlaced method is higher than the printing speed of the interlaced method.

Moreover, there are the one-pass printing method in which one printing line in the main scanning direction is formed by making one main scanning, and the multi-pass printing method in which one printing line is formed by making two or more main scannings. The printing speed of the former is higher than that of the latter.

However, in the case of the ink-jet printer using the piezoelectric element, the nozzle density itself is low as mentioned above. When creating the image by using the one-pass non-interlaced method in order to increase the printing speed, the resolution of the image will become low inevitably.

When the image density is low, the method of forming one pixel with one of multiple values is effective for improving the image quality. Examples of the multiple-value method may include the method of changing the size of one dot itself, the method of discharging the small dot twice or more to form one pixel, the method of changing the concentration of the ink itself, etc.

However, the multiple-value method is effective for the photographic image only in improving the image quality, but such effect is hardly acquired for the images such as graphics or characters.

In the case of characters and graphics, the dot size must be larger than the dot size to fill the background part of the image. When a small dot size is used, it becomes the low-concentration character or graphic image.

Therefore, in binary images, such as characters or graphics, the problem peculiar to low resolution arises, and in the case of the character image especially, the image quality of the character will degrade, and it is difficult to read the character image.

A description will be given of the problem peculiar to low resolution. The printed image of the ink-jet printer is expressed with the dots formed in the scanning direction of the head, and the conveyance direction of the recording paper which is the direction which intersects perpendicularly with it in the shape of a matrix.

When the character is printed as a dot image, the quality of the character varies greatly with the resolution of the image to print. For example, the number of the dots which constitute the character when the printing of the character of the same size is performed at the resolution of 600dpi is about 4 times larger than that when the printing is performed at the resolution of 300dpi. The former printing can express a fine image, and the character quality is better.

Especially, at the slanting line part of the character, the number of the dots arrayed in the shape of stairs is increasing according to the resolution, and the slanting line part of the character in the case of printing at 300dpi is more easily recognized as jaggies or notches.

There is proposed the image output method which improves the quality of the output image as disclosed in Japanese Patent No. 2886192. This method is aimed to reducing the jaggies appearing at the outline part of the image at the time of low resolution.

In the method disclosed in Japanese Patent No. 2886192, the bit pattern of a sample window in the bitmap image of the character is compared with a predetermined bit pattern, and when a match occurs, the central pixel in the sample window is corrected to be the small dot.

Moreover, there is proposed the image forming apparatus as disclosed in Japanese Patent No. 3029522. In the method disclosed in Japanese Patent No. 3029522, the outline part of the image is discriminated from the black dot data, and the printing dots other than the edge dots or the black dots are changed to the small-sized dots.

However, the above-mentioned methods of Japanese Patent No. 2886192 and Japanese Patent No. 3029522 are effective only for the LED printer or the laser printer as disclosed. This is because in the LED printer and the laser printer, the toner with a grain size of 10 micrometers or less is used and there is no spreading of the toner on the plain paper and the small dot as specified is almost obtained.

Furthermore, it is because it is possible to form the dot of the specified size in the optimal position by changing the luminescence position and length of the laser delicately in the laser printer.

However, in the ink-jet printing device, the spreading of the ink is larger than the spreading of the toner in the laser printer. Moreover, in order to form the dot, the ink-jet printing device requires a longer time than the LED printer and the laser printer, and it is difficult to change the dot size into a variety of sizes in accordance with a change in the number and length of the driving pulses within the driving period. It is only possible for the ink-jet printing device to change the dot size into a few kinds of dot sizes at most.

Moreover, for the same reason, the ink-jet printing device is able to form the dot only in the mostly regular position. But changing the position within one pixel, which can be made freely in the LED printer and the laser printer, is difficult for the ink-jet printing device to realize.

Moreover, there is the smoothing method which is called the anti-aliasing. However, in the case of the anti-aliasing, the dot is changed with a large number of gradations to create the outline of the character. It is possible to attain highly precise smoothing of the outline. However, the processing is very complicated and the processing time is needed for this method. When the high throughput is required like the latest ink-jet printer, this method is unsuitable.

Furthermore, when the dot size is changed and printed by the ink-jet printing method, the problem arises also in that the dot position on the paper changes with the dot size. A description will be given of this problem.

The pressure acts on the ink in the liquid chamber according to the action power of a pressure generating unit to give the pressure to the ink, and the ink carries out the discharge of the ink-jet printing device from the nozzle with the pressure.

The pressure generating unit in the case of the bubble jet (R) method (also called the thermal ink-jet method) is the thermally heating resistor for generating air bubbles, while the same in the case of the piezoelectric method is the piezoelectric element which is the electro-mechanical transducer for deforming the liquid-chamber wall.

In order to change the diameter of the dot with the ink-jet printing device, the method of changing the energy supplied to the pressure generating unit is usually used. Specifically, the magnitude of the drive voltage of the pressure generating unit is changed, or the pulse width of the driving pulse or the pulse number is changed.

For the method of changing the drive voltage among these methods, a plurality of signal receiving channels to which the changed drive voltage is supplied are required, and a switching unit for switching and choosing one of the drive voltages for each of these channels is also required. Hence, the driving element (driver IC) when the method of changing the drive voltage is used becomes large.

On the other hand, when the method of controlling the pulse width or the pulse number is used, it is possible to change the pulse width or the pulse number by controlling the switching unit according to the time. This is advantageous in that what is necessary is just to use only one switching unit for every channel. Especially, in the case of the ink-jet printing device using the piezoelectric element, the pulse-width modulation or pulse-number modulation method is used.

However, when forming the ink drop which capacity is different (or the diameter of the dot is different) by using the pulse-width modulation or pulse-number modulation method, the length of the driving pulse differs. Although the time that the driving pulse is inputted and the rising of the meniscus starts is the same, the time for the discharged ink drop to reach the paper is different since the period from the OFF state of the driving pulse to the creation of the ink drop is different. As a result, the dot position on the paper varies depending on the dot size.

For this reason, even if the outline part of the character is corrected by using the small printing dot in order to improve the image quality, the small-sized dot is not formed in the requested position, and therefore the image quality will deteriorate.

US 6,021,256 discloses a system and method for performing edge enhancement of low resolution binary image files in which gradient angles of pixels are determined prior to replacing original bitmap data with edge enhanced gray scale data.

### DISCLOSURE OF THE INVENTION

An object of the present invention is to provide an improved image-processing method and apparatus in which the above-mentioned problems are eliminated.

Another object of the present invention is to provide an image-processing method and apparatus which realizes high-speed printing of an image forming apparatus using the ink-jet printing method with effective improvement of the image quality by reducing the step-change part of the outline of the image of characters and/or graphics which is subjected to half-tone processing.

Another object of the present invention is to provide an image-forming apparatus which realizes high-speed printing using the ink-jet printing method with effective improvement of the image quality by reducing the step-change part of the outline of the image of characters and/or graphics which is subjected to half-tone processing.

In order to achieve the above-mentioned objects, there is provided an image-processing method and an image-processing apparatus as defined in the independent claims.

According to the present invention, it is possible to reduce the step-change part of the outline of the image of characters and/or graphics which is subjected to half-tone processing, so that the image quality can be improved and high-speed printing of the image forming apparatus using the ink-jet printing method can be realized.

### BRIEF DESCRIPTION OF THE DRAWINGS

Fig. 1 is a perspective view showing the outline composition of the mechanism part of an exemplary serial type ink-jet printing device.
Fig. 2 is a cross-sectional view showing the principal part of the ink-jet head in the ink-jet printing device of Fig. 1.
Fig. 3 is a diagram for explaining the nozzle pitch of the ink-jet head.
Fig. 4 is a block diagram showing the composition of the control unit in the ink-jet printing device of Fig. 1.
Fig. 5 is a block diagram showing the functional composition of each of the host computer and the ink-jet printing device.
FIG. 6 is a diagram showing an example of the output character which is subjected to a conventional half-tone processing using 50% for each of the large and middle drops.
FIG. 7 is a diagram showing the dot configuration of a slanting part of the character which is subjected to the conventional half-tone processing using 50% for each of the large and middle drops.
FIG. 8 is a diagram showing the dot configuration of the slanting line part which is subjected to a half-tone processing in an embodiment of the invention using 50% for each of the large and middle drops.
FIG. 9 is a diagram for explaining the drive waveform of the head.
FIG. 10 is a block diagram showing the composition of the drive circuit of the head which circuit corresponds to the head driving unit of FIG. 4.
FIG. 11 is a diagram showing the 5 x 5 dot window which is used for pattern matching.
FIG. 12 is a flowchart for explaining the processing of the pattern matching.
FIG. 13 is a diagram showing the composition of the driver IC.
FIG. 14 is a diagram for explaining the details of the processing of the pattern matching.
FIG. 15 is a diagram for explaining the case in which the number of the dots which form.a straight line between two step-change parts (F, G) in the slanting line which is subjected to the half-tone processing using 50% for each of the large and middle drops is 2.
FIG. 16 is a diagram for explaining the case in which the number of the dots which form a straight line between two step-change parts in the slanting line which is subjected to the half-tone processing using 50% for each of the large and middle drops is 1.
FIG. 17 is a diagram showing an example of the reference pattern in the 5 x 5 dot window.
FIG. 18 is a diagram for explaining the case in which the number of the dots which form a straight line between two step-change parts in the slanting line which is subjected to the half-tone processing using 100% of the small drops is 4.
FIG. 19 is a diagram for explaining the case in which the number of the dots which form a straight line between two step-change parts in the slanting line which is subjected to the half-tone processing using 50% of the middle and small drops is 4.
FIG. 20 is a diagram showing another example of the window used for the pattern matching.
FIG. 21 is a flowchart for explaining the processing of adding the small drop to the dot which forms the blank only.
FIG. 22 is a flowchart for explaining the processing of adding the small drop to the dot which forms the font only.
FIG. 23 is a flowchart for explaining the processing in which the pattern matching is performed for each bit per window to the bitmap data as the font data.
FIG. 24 is a diagram showing the example of the slanting line in which jaggies have been corrected by the processing of FIG. 23.
FIG. 25 is a diagram for explaining the problem that the small drops for the correction are separated in the slanting line with large inclination.
FIG. 26 is a diagram showing an example of the correction which is compatible with reduction of the influence of dot position deviations and the jaggies correction effect by changing the jaggies correction method by the inclination.
FIG. 27 is a diagram showing an example of the reference patterns with the 4/1 inclination and the 1/4 inclination.
FIG. 28 is a block diagram showing the composition of the ink-jet printing device in which the detection unit is provided.

### BEST MODE FOR CARRYING OUT THE INVENTION

A description will now be given of the preferred embodiments of the invention and reference examples with reference to the accompanying drawings.

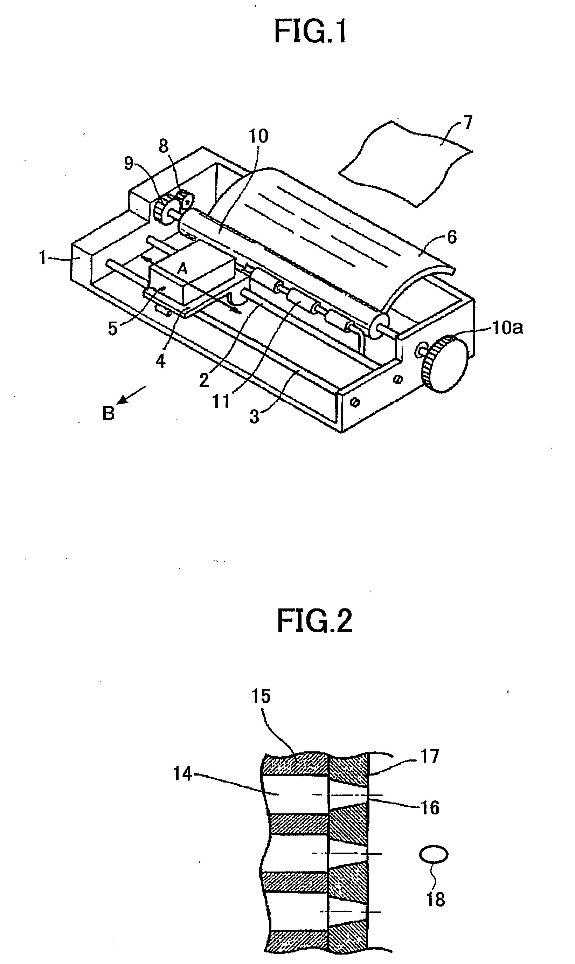

With reference to FIG. 1 through FIG. 5, the ink-jet printing device (image forming apparatus) in the first preferred embodiment of the present invention will be explained.

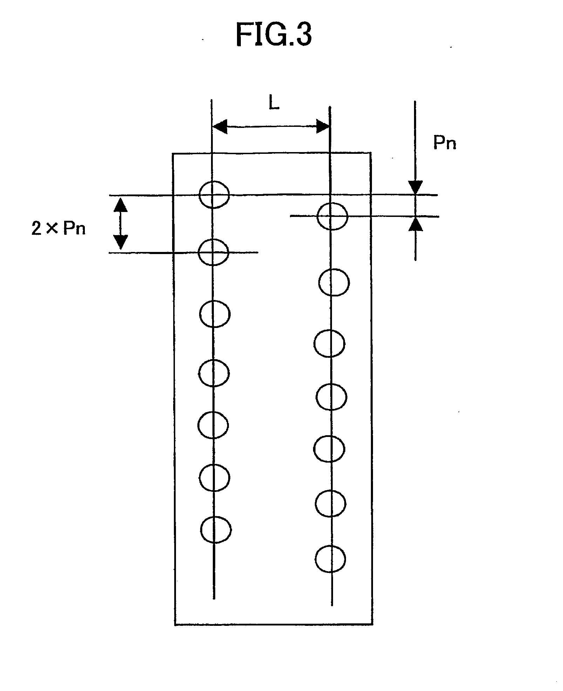

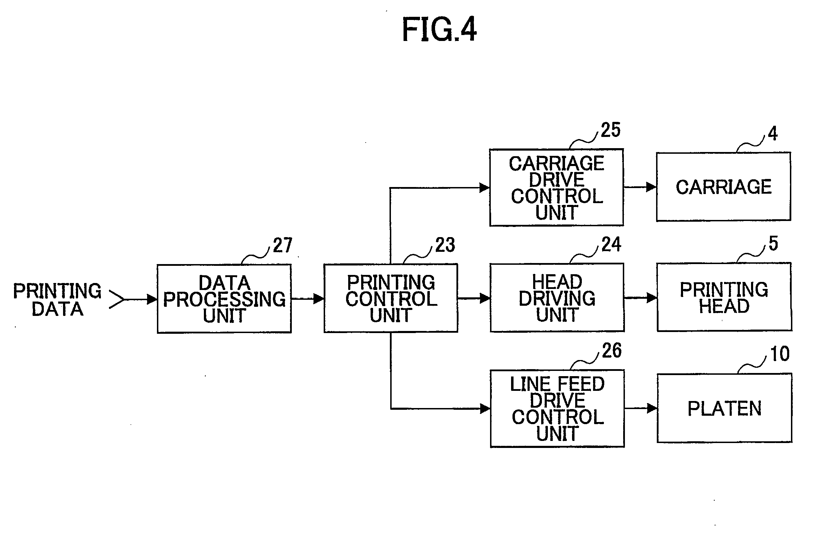

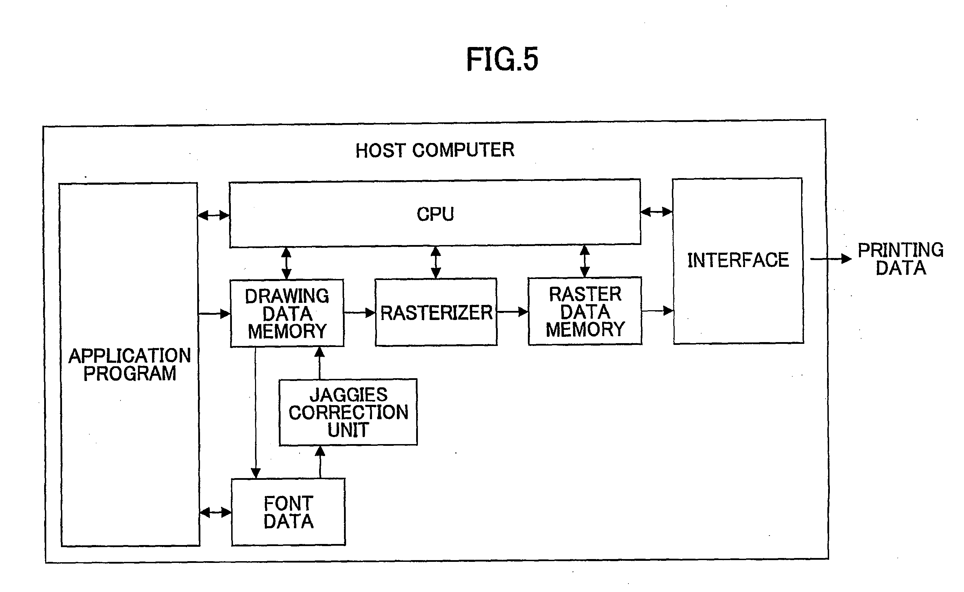

FIG. 1 shows the outline composition of the mechanism part of an exemplary serial type ink-jet printing device. FIG. 2 is a cross-sectional view showing the principal part of the ink-jet head in the ink-jet printing device of FIG. 1. FIG. 3 is a diagram for explaining the nozzle pitch of the ink-jet head. FIG. 4 shows the composition of the control unit in the ink-jet printing device of FIG. 1. FIG. 5 shows the functional composition of each of the host computer and the ink-jet printing device.

The ink-jet printing device comprises the frame 1, the guide rails 2 and 3, the carriage 4, and the printing head 5. The guide rails 2 and 3 are constructed horizontally across the frame 1. The carriage 4 is movably connected to the guide rails 2 and 3 so that the movement of the carriage 4 in the direction indicated by the arrow A in FIG. 1 is possible. The printing head 5 is carried on the carriage 4. The movement of the carriage 4 in the direction of the arrow A is driven by the power source (which is not shown), such as the motor.

The paper (recording paper) 7 which is the printing medium is placed onto the guide board 6, and the paper 7 is received by the platen 10. The platen 10 is equipped with the feeding knob 10a which is rotated through the drive gear 8 and the sprocket gear 9 by the power source which is not illustrated. Conveyance of the paper 7 in the direction indicated by the arrow B in FIG. 1 is allowed by the pressure roller 11 while the paper 7 is compressed between the pressure roller 11 and the peripheral surface of the platen 10 under pressure.

In the ink-jet printing device the movement or scanning of the printing head 5 (carriage 4) is carried out in the main scanning direction (the direction of the arrow A) while the conveyance of the paper 7 is carried out in the sub-scanning direction (the direction of the arrow B) so that the ink drop is discharged from the printing head 5 and an image is printed on the paper 7.

A description will be given of the carriage 4, the printing head 5, the ink supply system, etc. in the following.

The carriage 4 is equipped with the printing head 5. The printing head 5 comprises the ink-jet heads which carry out the discharging of the ink drop of each of the colors of yellow (Y), cyan (C), magenta (M) and black (Bk) respectively, and two or more ink discharge outputs are arranged in the ink-jet heads in the direction which is perpendicular to the main scanning direction, and the head 5 is mounted with the direction of the discharge of the ink drop being the downward direction. In addition, the respective ink cartridges for supplying the ink of each color to the printing head 5 are mounted on the carriage 4 in such a manner that they are exchangeable.

The ink cartridge 15 (see FIG. 2) is provided at the top with the air outlet open to the atmosphere, and provided at the bottom with the ink supply outlet for supplying the ink to the ink-jet head inside. The ink cartridge 15 contains the porosity object inside, and this porosity object being filled with the ink. The ink of the ink cartridge 15 being supplied to the ink-jet head is maintained at a slightly negative pressure by the capillary tube power of the porosity object.

Moreover, the printing head in the present embodiment is constructed using the separate ink-jet heads of the individual color component inks. Alternatively, the printing head may be constructed as one head composition which has the nozzle sequence which carries out the discharge of the ink drop of each color.

Furthermore, as a printing head (ink-jet head) 5 in which pressurize the ink and the ink drop is made to form. Although the electronic type which is made to carry out displacement of the diaphragm and carries out ink pressurization by the static electricity power between the diaphragm which forms the liquid-chamber surface of a wall by electric machine transducers, such as the piezoelectric element, and forms the piezoelectricity type or the ink passage surface of a wall which carries out ink pressurization through the diaphragm, and the electrode which counters this can be used.

A description will be given the case in which the piezoelectric type ink-jet head is used.

As shown in FIG. 2 and FIG. 3, the printing head 5 is provided so that the nozzle plate 17 in which the plurality of nozzles 16 are formed is attached to the front surface of the liquid-chamber forming member 15 which forms the liquid chamber 14.

By giving the pressure to the ink in the liquid chamber 14 by the actuator which is the energy occurrence unit by the piezoelectric device which is not illustrated, the ink in the liquid chamber 14 serves as the ink drop 18 from the nozzle 16 of the nozzle plate 17, files, and adheres to the paper 7 as a dot.

driving selectively the actuator which gives the pressure to each liquid chamber 14.

In this printing head 5, two or more nozzles 16 constitute two or more dot formation units, and the sequence (nozzle sequence) of the nozzle 16 is made to intersect perpendicularly to the main scanning direction, and the pitch between the nozzles 16-16 is represented by 2 x Pn.

Moreover, the nozzle sequence distance L Separates on the one head, and is formed in it the two sequences. It is shifting, being configured alternately and using the nozzle sequence of the two sequences Pn, and the nozzle sequence of the two sequences can form the image of Pitch Pn in the sub-scanning direction by one scanning and the feed.

Moreover, in order to carry out the movement or scanning of the carriage 4 in the main scanning direction, the drive pulley driven and rotated by the scanning motor and the follower pulley are connected together by the timing belt, and by fixing this timing belt to the carriage, the two-way movement of the carriage is carried out according to the forward or reverse rotation of the scanning motor.

On the other hand, in order to convey the paper set on the guide board to the printing part of the printing head, there are provided the feed roller and friction pad which delivers the paper from the guide board, the guide member which guides the conveyance of the paper, the conveyance roller which conveys the paper from the feed roller, and the tip roller which specifies the delivery angle of the paper from the conveyance roller forced on the peripheral surface of this conveyance roller and the conveyance roller.

The conveyance roller is driven and rotated by the feed roller through the gear train. And the platen roller is configured in order to guide the paper sent out from the conveyance roller corresponding to the successive range of the main scanning direction of the carriage to the printing part of the printing head (guide).

Furthermore, at the downstream part of the printing receptacle in the paper conveyance direction, the conveyance roller which is rotated and driven in order to send out the paper in the ejection direction, and the spur are arranged. Further arranged are the ejection roller for sending out the paper to the ejection tray, the spur, the guide member for securing the ejection course of the paper, etc.

The printing head is made to drive according to the image signal at the time of printing, moving the carriage 4. The ink is breathed out in the stopped paper, the one line is printed, and the following line is printed for the paper after predetermined quantity conveyance.

At the time of the printing end, by receiving the printing end signal or the signal with which the back end of the paper arrived at the printing region, printing operation is terminated and the paper is delivered to the paper.

Moreover, in the position which separated from the printing region by the side of the transfer direction right end of the carriage, the recovery processing device which is not illustrated for recovering the poor discharge of the printing head is configured.

To the recovery processing device, it has the cap unit, the suction unit, and the cleaning unit. During printing standby, it transfers at this recovery processing device side, and capping of the head is carried out with the capping unit, and the carriage can prevent the poor ink discharge by ink dryness by maintaining discharge outlet at the humid state.

Moreover, by carrying out the discharge of the ink which is not related to printing in the middle of printing etc., the ink viscosity in all discharge outputs becomes fixed, and the stable discharge performance is maintained.

When the poor discharge occurs, the discharge outlet of the head is sealed with the capping unit, air bubbles etc. are sucked out of the discharge outlet with the ink with the suction unit through the inner tube, the ink, garbage, etc. adhering to the discharge outlet face are removed by the cleaning unit, and the poor discharge is recovered.

Moreover, the attracted ink is sent to the consumed ink tank (not shown) installed on the main part bottom, and absorbed and retained by the ink absorber inside the consumed ink tank.

A description will be given of the example of the printing device which is not provided with the function of generating the dot pattern actually printed in response to the print command of the character or image drawing. That is, the print command from the application software executed on the host computer is processed by the print driver incorporated as the software in the host computer, and rasterized to the data of the printing dot pattern, and such data is transmitted to the printing device so that the printing is performed.

Specifically, the print command of the character or image drawing from the application or the operating system in the host computer (for example, the command in which the position, the thickness, the form, etc. of the line to be recorded are described, or the command in which the font, the size, the position of the character to be recorded, etc.) of the character is stored temporarily in the drawing data memory. In addition, these commands are described in the specific print language.

The command stored in the drawing data memory is interpreted by the rasterizer. If it is the command to print a line, it is transformed into the printing dot pattern according to the position, the thickness, etc. of the line which are specified by the command. If it is the command to print a character, the outline information of the corresponding character is called from the font outline data stored in the host computer, and the outline information is transformed into the printing dot pattern according to the size and the position of the character which are specified by the command. Such rasterized dot patterns are stored in the raster data memory.

At this time, the host computer functions to rasterize the command or the outline information into the data of the printing dot pattern by using the known rectangular lattice as the basic printing position. The printing dot pattern stored in the raster data memory is transmitted to the ink-jet printing device via the interface.

As shown in FIG. 4, the control unit of the ink-jet printing device comprises the printing control unit 23, the head driving unit 24 which drives each actuator of the printing head 5, the carriage drive control unit 25 which carries out driving control of the carriage 4, the line feed drive control unit 16 which carries out the rotation driving of the platen 10, and the data-processing unit 27.

The printing data sent from the host computer is stored in the raster data memory (which is not illustrated). After the predetermined data is received, the stored printing data is supplied via the data-processing unit 27 to the head driving unit 24 so that the ink drop is discharged from the predetermined nozzle outlet 16 of the printing head 5 based on the printing dot data, the image according to the printing data is printed on the paper 7. At the same time, the rotation of the platen 10 or the conveyance of the paper 7 (the sub-scanning) is controlled through the line feed drive control unit 16 and the movement of the carriage 4 (the main scanning) is controlled through the carriage drive control unit 25.

When the printing on the plain paper is performed by the conventional ink-jet printing device, several image quality problems peculiar to the ink-jet printing arise, such as the color-reproduction characteristic, the durability, the light resistance, the ink dryness characteristic, the character blot (feathering), the color boundary blot (color bleeding), the double-sided printing characteristic, etc. of the image. Furthermore, when the high-speed printing on the plain paper is carried out, it is very difficult to satisfy all these characteristics.

Moreover, the ink commonly used for the ink-jet printing contains the water as the major component, the colorant, and the wetting agents, such as glycerol, for the purpose of prevention of clogging.

As the colorant, there are the dye and the pigment. And the dye based ink is conventionally used in many cases for the color part from the reason that the outstanding coloring characteristic and stability are acquired.

However, if the recording paper only for the ink jet printing in which solidity, such as the light resistance of the image obtained using color system ink and durability, is inferior to the colorant to the thing using the pigment and which has the ink absorption layer especially about durability is used, although it will become possible to aim at a certain amount of improvement, when the plain paper is used, it is common that it is not that which may be satisfactory.

Then, in order to improve the problem over the color system ink in the case where the plain paper is used in recent years, examination or utilization is carried out for use of the pigment system ink which uses the organic pigment, the carbon black, etc. as the colorant to the plain paper printing.

Since the pigment does not have the solubility to the water unlike the color, usually, it mixes and carries out the distributed processing of the pigment with the dispersant, and is used for the water as water ink in the state where stable dispersion was carried out.

Generally, using the pigment allows the light resistance and waterproof improvement to be obtained. However, it is difficult to satisfy the other image quality characteristics simultaneously. Especially, it is difficult to obtain high image concentration, sufficient coloring characteristic, color-reproduction characteristic, etc. when carrying out the high-speed printing on the plain paper. There have been still the image quality problems that are not fully satisfactory, such as the character blot, the color boundary blot, the double-sided printing characteristic, the ink dryness characteristic (fixing characteristic), etc.

A description will be given of an exemplary composition of the ink. The ink drop employs the printing ink which has the following composition.

That is, the pigment is used as the colorant for printing, and the solvent for decomposing and distributing the pigment is used as the indispensable ingredient. And the wetting agents, the surface active agent, the emulsion, the antiseptics, and the pH adjustment agent are further used as the additives. The wetting agent 1 and the wetting agent 2 are mixed because viscosity adjustment can be performed easily and the respective features of the wetting agents can be harnessed. Namely, the ink is essentially composed of the following elements (1) to (10):
(1) Pigment (self-dispersibility pigment) 6wt% or more;
(2) Wetting agent 1;
(3) Wetting agent 2;
(4) Water-soluble organic solvent;
(5) Surface active agent of anionic or non-ionic type;
(6) Polyol or glycol ether with the carbon number of eight or more;
(7) Emulsion;
(8) Antiseptics;
(9) pH adjustment agent;
(10) Pure water.

Hereafter, each of the elements of the ink will be explained.
(1) Concerning the pigment, the inorganic pigment and the organic pigment may be used without limiting the kind of the pigment. The examples of the inorganic pigment used may include titanium oxide, iron oxide, and further include the carbon black which is manufactured by using the well-known methods, such as the contacting method, the furnace method, and the thermal method.

Moreover, the examples of the organic pigment used may include the azo pigments (for example, azo lake, insoluble azo pigment, condensation azo pigment, chelate azo pigment, etc.), the multi-ring type pigments (for example, phthalocyanine pigment, perylene pigment, perynone pigment, anthraquinone pigment, uinacridone pigment, dioxazine pigment, thioindigo pigment, ISO indolinone pigment, quinophtharone pigment, etc.), the dye chelates (for example, the basic dye type chelate, the acid dye type chelate, etc.), the nitro pigments, the nitroso pigments, the aniline black, etc.

Any of these pigments which has a desirable affinity with the water is preferably used. The grain size of the pigment used is desirably in the range of 0.05 to 10 micrometers, and more preferably, 1 micrometer or less, and most preferably, 0.16 micrometers or less.

The amount of addition of the pigment as the colorant in the ink is desirably in the range of about 6 to 20% by weight, and more preferably in the range of about 8 to 12% by weight.

The following are mentioned as the examples of the pigment preferably used.

The examples of the black pigment used may include the carbon black (C. I. pigment black 7), such as the furnace black, the lamp black, the acetylene black, and the channel black, the metals, such as copper, iron (C. I. pigment black 11), and titanium oxide, and the organic pigments, such as the aniline black (C. I. pigment black 1).

Moreover, the examples of the color pigments may include the C.I. pigment yellow 1 (First yellow G), 3, 12 (Diarylide yellow YT 553D), 13, 14, 17, 24, 34, 35, 37, 42 (yellow iron oxide), 53, 55, 81, 83 (Permanent yellow HR), 95, 97, 98, 100, 101, 104, 408, 409, 110, 117, 120, 138, 153, the C.I. pigment oranges 5, 13, 16, 17, 36, 43, 51, the C. I. pigment red 1, 2, 3, 5, 17, 22 (Brilliant first Scarlett), 23, 31, 38, 48:2 (Permanent red 2B, (Ba)), 48:2 (Permanent red 2B (calcium)) 48:3 (Permanent red 2B (Sr)), 48:4 (permanent red 2B (Mn)), 49:1, 52:2, 53:1, 57:1 (Brilliant Carmine 6B), 60:1, 63:1, 63:2, 64:1, 81 (Rhodamine 6G lake), 83, 88, 101 (Iron oxide red), 104, 105, 106, 108 (Cadmium red), 112, 114, 122 (quinacridone magenta), 123, 146, 149, 166, 168, 170, 172, 177, 178, 179, 185, 190, 193, 209, 219, the C.I. pigment violet 1 (Rhodamine lake), 3, 5:1, 16, 19, 23, 38, the C.I. pigment blue 1, 2, 15 (Phthalocyanine blue R), 15:1, 15:2, 15:3 (Phthalocyanine blue E), 16, 17:1, 56, 60, 63, the C.I. pigment greens 1, 4, 7, 8, 10, 17, 18, 36, etc.

In addition, the surface of the pigment (for example, carbon) is processed by the resin etc., and the graft pigment which is dispersible in water, the processed pigment which is dispersible in water with the functional groups, such as sulfone group or carboxyl group, which are added to the surface of the pigment (for example, carbon) may be used.

Moreover, the microcapsule which is made to contain the pigment such that the pigment can be dispersed in water may be used.

It is desirable that the pigment for black ink and the dispersant are added to the ink as the pigment dispersion liquid which is made to disperse the pigment in the water medium. The desirable example of the dispersant used may be the known dispersion liquid used for adjusting the known pigment dispersion liquid.

The examples of the dispersion liquid used may include the following: poly-acrylic acid, poly-methacrylic acid, acrylic acid-acrylonitrile copolymer, vinyl acetate acrylic acid ester copolymer, acrylic acid-acrylic acid alkyl ester copolymer, styrene acrylic acid copolymer, styrene methacrylic acid copolymer, styrene acrylic acid-acrylic acid alkyl ester copolymer, styrene methacrylic acid-acrylic acid alkyl ester copolymer, styrene-alpha-methyl styrene acrylic acid copolymer, styrene alpha-methyl styrene acrylic acid copolymer-acrylic acid alkyl ester copolymer, styrene maleic acid copolymer, the vinyl-polymers naphthalene maleic acid copolymer, vinyl acetate ethylene copolymer, vinyl acetate fatty acid vinyl-polymers ethylene copolymer, vinyl acetate maleate copolymer, vinyl acetate crotonic acid copolymer, vinyl acetate acrylinc acid copolymer, etc.

According to the preferred embodiment of the invention, the average molecular weight of any of these copolymers used is desirably in the range of 3,000 to 50,000, more preferably, in the range of 5,000 to 30,000, and most preferably in the range of 7,000 to 15,000. The amount of addition of the dispersant used may be in such a range that the pigment is dispersed stably without affecting the effects of the invention. The ratio of the pigment to the dispersant is desirably in the range of 1:0.06 to 1:3 is desirable, and more preferably in the range of 1:0.125 to 1:3.

The ratio of the pigment used for the colorant to the total weight of the printing ink is in the range of 6% to 20% by weight, and the grain size of the colorant pigment is in the range of 0.05 micrometers to 0.16 micrometers. The pigment is dispersed in water, and the dispersant is the macromolecule dispersant the molecular weight of which is in the range of 5,000 to 100,000. If the water-soluble organic solvent containing the pyrolidone derivative, especially 2-pyrolidone is used for at least one of the color inks, the image quality will improve.
(2) to (4) Concerning the wetting agent 1, the wetting agent 2 and the water-soluble organic solvent, the water is used as a liquid medium in the ink. In order to obtain the desired physical properties of the ink and to prevent dryness of the ink, and in order to improve the dissolution stability etc., the examples of the water-soluble organic solvent used may include the following. It is possible to use these water-soluble organic solvents by mixing two or more solvents.

The examples of the wetting agents 1 and 2 and the water-soluble organic solvent used may include the following: the polyhydric alcohols, such as ethylene glycol, di-ethylene glycol, tri-ethylene glycol, propylene glycol, di-propyrene glycol, tri-propyrene glycol, tetra-ethylene glycol, hexylene glycol, polyethylene glycol, polypropylene glycol, 1,5-pentanediol, 1,6-hexanediol, glycerol, 1,2,6-hexanetriol, 1,2,4-butanetriol, 1,2,3-butanetriol, petriol; the polyhydric alcohol alkyl esters, such as ethylene glycol mono-ethyl ether, ethylene glycol mono-butyl ether, di-ethylene glycol mono-methyl ether, di-ethylene glycol mono-ethyl ether, di-ethylene glycol mono-butyl ether, tetra-ethylene glycol mono-methyl ether, propylene glycol mono-ethyl ether; the polyhydric alcohol allyl ethers, such as ethylene glycol mono-phenyl ether, ethylene glycol mono-benzyl ether; the nitrogen-including multi-ring compounds, such as 2-pyrolidone, N-methyl-2-pyrolidone, N-hydroxyethyl-2-pyrolidone, 1,3-dimethylimidazolidinone, epsilon-caprolactam, gamma-butyrolactone; the amide compounds, such as formamide, N-methyl formamide, N, N-dimethyl formamide; the amine compounds, such as mono-ethanol amine, di-ethanol amine, tri-ethanol amine, mono-ethyl amine, di-methyl amine, tri-ethyl amine; the sulfur-including compounds, such as di-methyl sulfoxide, sulfolane, thiodiethanol; propylene carbonate, carbonic acid ethylene, etc.

The desirable examples of these organic solvents may include diethylene glycol, thiodiethanol, polyethylene glycol 200-600, triethylene glycol, glycerol, 1,2,6-hexanetriol, 1,2,4-buthanetriol, petriol, 1,5-penthanediol, 2-pyrolidone, and N-methyl-2-pyrolidone. These are effective in solubility and prevention of the poor injection characteristic due to the moisture evaporation.

The other wetting agents suitably used may contain the saccharide. The examples of the saccharide used may include the monosaccharides, the disaccharide, the oligosaccharides (the trisaccharide and quatrosaccharide are included), and the polysaccharides. The desirable examples of the polysaccharides may include the glucose, the mannose, the fructose, the ribose, the xylose, the arabinose, the galactose, the maltose, the cellobiose, the lactose, the sucrose, the trehalose, the maltotriose, etc. Here, the polysaccharide means the sugar in the wide sense and suppose that it includes the substances which widely exist in the nature, such as alpha-cyclodextrin, cellulose, etc.

Moreover, the examples of the derivatives of these saccharides may include the reducing sugar (for example, the sugar alcohol (general formula: HOCH2(CHOH)nCH2 OH where n is the integer of 2 to 5), the oxidation sugar (for example, the aldon acid, the uron acid, etc.), the amino acid, the thio acid, etc. Especially the sugar alcohol is desirable and the desirable examples of the sugar alcohol may include the Maltitol, the Sorbit, etc.

The content of the saccharides in the ink is desirably in the range of 0.1 to 40% by weight, and more preferably in the range of 0.5 - 30% by weight.
(5) Concerning the anionic or nonionic surface active agent, any agent may be used without limiting the kind of the surface active agent. The examples of the anionic surface active agent used may include polyoxyethylene alkyl ether acetate, dodecylbenzene sulfonate, lauric acid salt, polyoxyethylene alkyl ether sulfate, etc.

The examples of the nonionic surface active agent may include polyoxyethylene alkyl ether, polyoxyethylene alkyl ester, polyoxyethylene sorbitan fatty acid ester, polyoxyethylene alkylphenyl ether, polyoxyethylene alkyl amine, polyoxyethylene alkyl amide, etc. One of the above examples of the surface active agents may be used solely or two or more among them may be mixed in combination.

The surface tension according to the present invention is an index which denotes the permeability to paper. Specifically, it means the dynamic surface tension for the short time within one second after the surface is formed, and it differs from the static surface tension measured by the saturation time.

Although any method of measuring the dynamic surface tension, such as the conventional measuring method which is known from Japanese Laid-Open patent Application No. 63-31237, can be used, the surface tension measuring instrument of Wilhelmy hung-board type is used to measure the dynamic surface tension according to the present invention.

The desirable value of the surface tension which allows excellent fixing characteristic and dryness characteristic is smaller than 40 mJ/m², and more preferably it is smaller than 35 mJ/m².
(6) Concerning the polyol or glycol ether with the carbon number of eight or more, the polyol and/or glycol ether which is partially water-soluble and has the solubility in a range of 0.1 to 4.5% by weight in water at 25-degree C is added so that the ratio of the content of the polyol and/or glycol ether to the total weight of the printing ink is in the range of 0.1 to 10.0% by weight. It is turned out that if the above conditions are met, the wettability to the heat element of the ink is improved and the discharge stability and frequency stability are acquired with a small amount of addition.
   (6-1) 2-ethyl-1,3-hexanediol; solubility:4.2% (20 degrees C)
   (6-2) 2,2,4-trimethyl-1,3-pentanediol; solubility: 2.0% (25 degrees C)

The penetrant which has the solubility in the range of 0.1 to 4.5% by weight in water at 25-degree C is advantageous in that the permeability is high in spite of low solubility. Therefore, it is possible to produce the ink which has high permeability, with the other solvent in combination with the penetrant having the solubility in the range of 0.1 - 4.5% by weight in water at 25-degree C, or in combination with the other surface active agent.
(7) Concerning the emulsion, it is desirable that the resin emulsion be added to the ink according to the present invention. The resin emulsion means the emulsion whose continuation phase is the water and whose dispersion phase is one of the following resin ingredients. The examples of the resin ingredients of the dispersion phase of the resin emulsion used may include the acrylic resin, the vinyl acetate resin, the styrene-butadiene resin, the vinyl chloride resin, the acrylic styrene resin, the butadiene resin, the styrene resin, etc.

It is desirable that the resin is the polymer having both the hydrophilic portion and the hydrophobic portion.

Moreover, although the grain size of the resin is not limited as long as the emulsion is formed, the desirable diameter of the grain of the resin is about 150nm or less, and more preferably is in the range of 5 to 100nm. In these resin emulsions, the resin particles can be obtained by mixing in the water with the surface active agent in some case.

For example, the emulsion of the acrylic resin or the styrene-acrylic resin can be obtained by mixing (meta) acrylic acid ester and the surface active agent with (meta) acrylic acid ester or styrene, and in some case (meta) acrylic acid (meta) ester in the water.

The rate of mixture with the resin ingredients and the surface active agent is desirably in the range of 10:1 to 5:1. The formation of the emulsion becomes difficult when the amount of the surface active agent used does not reach the range. On the other hand, when the amount of the surface active agent used exceeds the range, the durability of the ink falls or there is the tendency for permeability to get worse.

The rate of the weight parts of the water to 100 weight parts of the resin in the dispersion phase of the resin emulsion is desirably in the range of 60 to 400, and more preferably in the range of 100 to 200. The examples of the commercially available resin emulsions may include "maikurojeru" E-1002 and E-5002 (styrene acrylic resin emulsion, Nippon Paint Co., Ltd.), "bonkohto" 4001 (acrylic resin emulsion, Dainippon Ink & Chemicals Inc.), "bonkohto" 5454 (styrene acrylic resin emulsion, Dainippon Ink & Chemicals Inc.), SAE-1014 (styrene acrylic resin emulsion, Nippon Zeon Co., Ltd.), "saibinohru" SK-200 (acrylic resin emulsion, Saiden Chemistry Co., Ltd.), etc.

In the ink used, the ratio of the content of the resin ingredients of the resin emulsion to the ink is desirably in the range of 0.1 - 40% by weight, and more preferably in the range of 1 - 25% by weight.

The resin emulsion has the character thickened and condensed, inhibits the osmosis of the coloring ingredients, and further has the effect which promotes fixing to the printing medium.

Moreover, depending on the kind of resin emulsion, the coat is formed on record material, and it has the effect which also raises the friction resistance of the printed matter.
(8) to (10) The known additives in the art, other than the colorant, the solvent, and the surface active agent, can be added to the ink according to the present invention.

The examples of the antiseptics or antimold used may include dehydroacetic acid sodium, sorbic acid sodium, 2-pyridinethiol-1-oxide sodium, benzoic acid sodium, pentachlorophenol sodicum, etc.

Concerning the pH adjustment agent, any arbitrary substances can be used if the pH value of the ink can be adjusted to be seven or more without affecting the ink prepared. The examples of the pH adjustment agent used may include the amines, such as diethanol amine and triethanoli amine, the carbonates of alkali metals, such as lithium carbonate, sodium carbonate and potassium carbonate, the hydroxides of alkali metals, lithium hydroxide, sodium hydroxide, potassium hydroxide, ammonium hydroxide, the 4th class ammonium hydroxide, the 4th class phosphonium hydroxide, etc.

The examples of the chelating reagent used may includes ethylene-diamine-tetraacetic acid sodium, nitrilotriacetic acid sodium, hydroxyethyl ethylenediamine-triacetic acid sodium, diethylene-triamine-pentaacetic acid sodium, uramildiacetic acid sodium, etc.

The examples of the anticorrosive used may include acid sulfite, sodium thiosulfate, ammonium thiodiglycolate, diisopropylamine nitrite, pentaerythritol tetranitrate, dicyclohexylamine nitrite, etc.

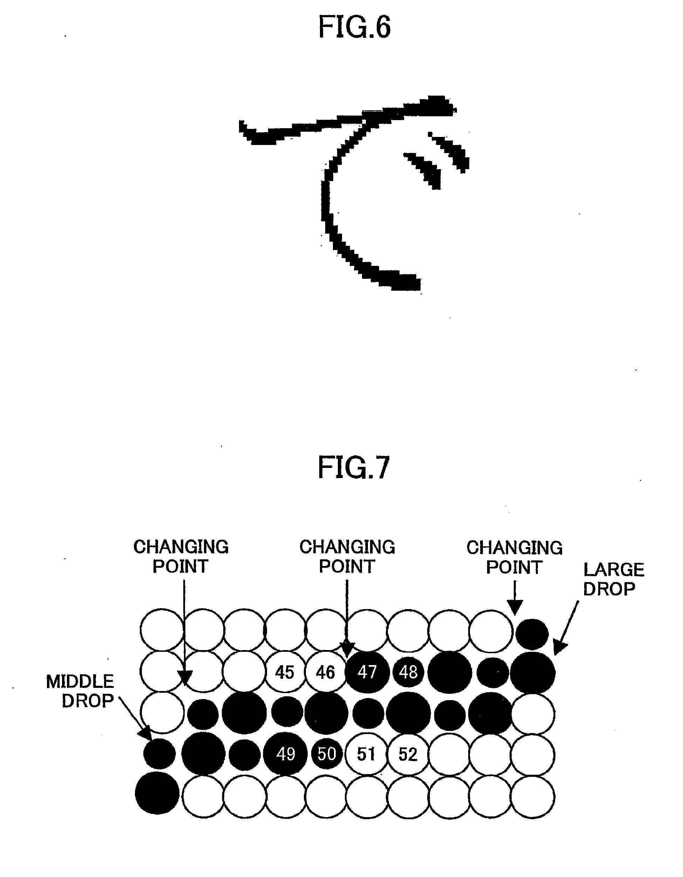

Next, the examples of the dots printed by the ink-jet printing device will be explained with reference to FIG. 6 to FIG. 8.

FIG. 6 shows the example of the output character which is subjected to the conventional half-tone processing using 50% for each of the large and middle drops. FIG. 7 shows the dot configuration of the slanting line part which is subjected to the conventional half-tone processing using 50% for each of the large and middle drops.

As shown in FIG. 6, in this example, jaggies take place in the slanting line part of the character, which shows a poor character quality. This is because, as shown in FIG. 7, the dots in the slanting line part are arranged in the shape of stairs.

In this example, the number of the dots which form the straight line between the two step-change parts of the stair-like character portion is four (which is called the one-fourth inclination slanting).

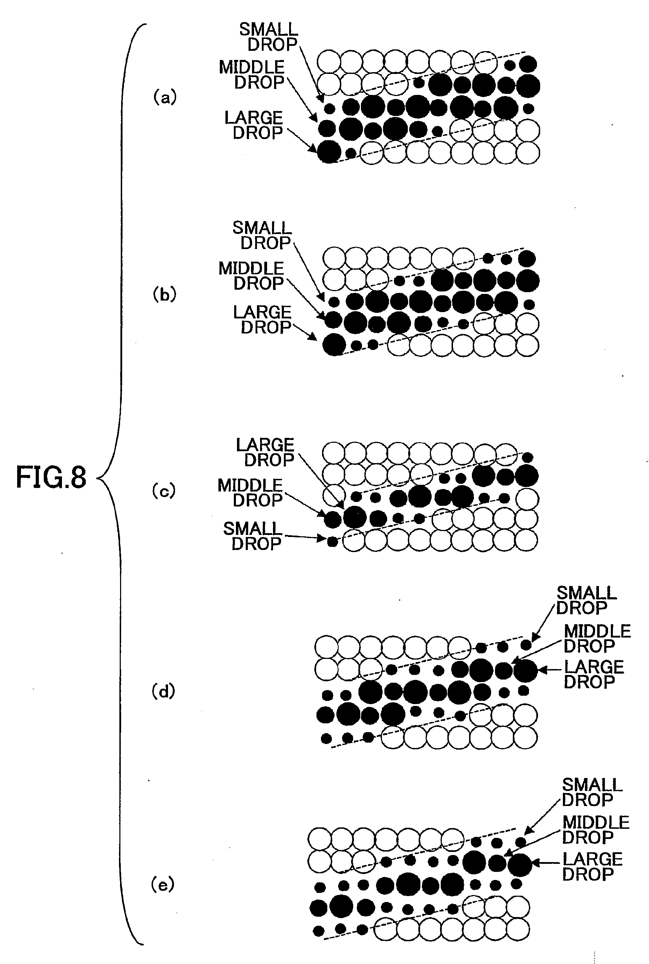

On the other hand, FIG. 8 shows the dot configuration of the slanting line part which is subjected to the half-tone processing in an embodiment of the invention which uses 50% for each of the large drop and the middle drop (which corresponds to the example of FIG. 7), and FIG. 8 (a) to (d) show different jaggies correction methods.

In FIG. 8, (a) and (b) indicate the examples in which the small drop is added to the blank part at the changing point, and (c) and (d) indicate the examples in which the small drop is added to the blank part and further the image dot is replaced by the small drop.

Specifically, FIG. 8 (a) shows the example in which one small drop is added to the blank part (positions of 46 and 51) at the changing point. The small drop is printed at the blank part 46 of the changing point. FIG. 8 (b) shows the example in which two small drops are added to the blank part (positions of 46, 45, 51 and 52) at the changing point. The two small drops are printed at the blank parts 45, 46, 51, and 52 of the changing points.

FIG. 8 (c) shows the example in which the dots (dots of 47 and 50) which form the changing point are replaced by the small drops in addition to the example of FIG. 8 (b). The small drops are printed at the two blank parts and the one image part (45, 46, 47, 50, 51, 52) of the changing points.

FIG. 8 (d) shows the example in which the two dots (48, 49) which form the changing point are further replaced by the small dots in addition to the example of FIG. 8 (c).

In these examples, the step-change part of the shape of stairs of the changing point is formed by the small drops, and the slanting line part is made comparatively smooth by the composition of the dots only. Furthermore, the ink-jet printer has the characteristics that the ink after reaching the paper spreads. Moreover, when the ink containing the coloring agent as the major compartments is printed on the plain paper is used, the problem called feathering arises even if jaggies are improved by the composition of the dots.

By using the ink described herein for the ink jet printing, the problem of feathering etc. can be reduced, and the blot of the shape of a mustache is lost and the improvement effect by the composition of the dots can be effectively raised.

Furthermore, the feathering is reduced but the overall blot remain in some content. In association with the surrounding dots, the outline part of the dots becomes smooth, and it is possible that the presence of jaggies in the output character becomes less conspicuous.

Therefore, it is possible to make jaggies hardly conspicuous by forming the smooth slanting part, although jaggies are the phenomenon peculiar to the ink jet printing, and still more peculiar to the ink described herein.

In addition, in the present embodiment, the above description has been given of the half-tone processing of the ratio of 50% for each of the large drop and the middle drop. Similarly, the half-tone processing which uses the large drop and the middle drop can be carried out for all the cases of any arbitrary ratio of the large drop and the middle drop.

Moreover, the above description has been given of the one-fourth inclination slanting in this embodiment. The same processing can be performed similarly for the other slanting with inclination of 1/3, 1/5 or less, and the slanting line subjected to mirroring or to rotation of 270 degrees, 180 degrees or 90 degrees.

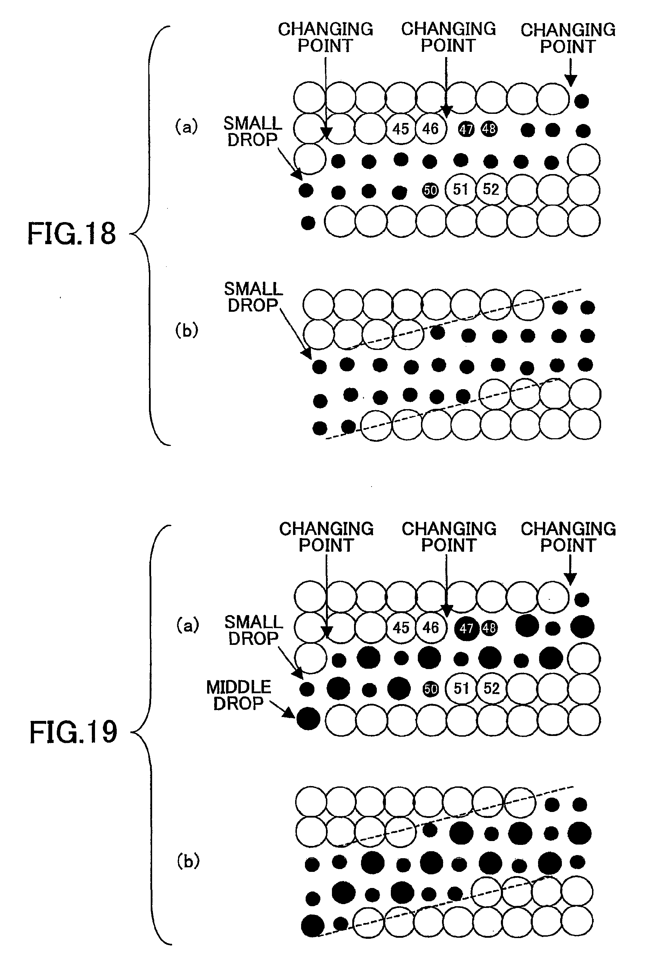

FIG. 19 (a) shows the case in which the number of the dots which form the straight line between two step-change parts in the slanting line which is subjected to half-tone processing using 50% for each of the middle and small drops is 4 (slanting of inclination 1/4).

As shown in this example, the step-change part of the shape of stairs of the changing point is reduced by forming the small drop, and the comparatively smooth slanting line part can be formed by the composition of the dots only. Furthermore, the ink-jet printer has the characteristics that the ink after reaching the paper spreads. Moreover, when the ink containing the coloring agent as the major components is printed on the plain paper is used, the problem called feathering arises even if jaggies are improved by the composition of the dots.

By using the ink described herein for the ink jet printing, the problem of feathering etc. can be reduced, and the blot of the shape of a mustache is lost and the improvement effect by the composition of the dots can be effectively raised.

Furthermore, the feathering is reduced but the overall blot remain in some content. In association with the surrounding dots, the outline part of the dots becomes smooth, and it is possible that the presence of jaggies in the output character becomes less conspicuous.

Therefore, it is possible to make jaggies hardly conspicuous by forming the smooth slanting part, although jaggies are the phenomenon peculiar to the ink jet printing, and still more peculiar to the ink of the invention.

Moreover, the method of adding two small drops to the blank part (positions of 46, 45, 51, 52) of the changing points will allow the same effect. Furthermore, if the dot (dots of 47 and 50) which forms the changing point is replaced by the small drop, and the two small drops are printed at two blank parts of the changing point and one image part (45, 46, 47, 50, 51, 52), the same effect can be obtained. Moreover, if the two (48, 49) of the dots which forms the changing point are transformed into the small drops and the two small drops are printed at two blank parts of the changing point and two image parts (45, 46, 47, 50, 51, 52), the same effect can be obtained.

In addition, in the present embodiment, the above description has been given of the case of the half-tone processing which uses the ratio of 50% for each of the small drop and the middle drop. The half-tone processing can also be carried out similarly in the case of the ratio used as the middle drop > small drop. That is, in such a case, the number of the middle drops used is larger than the number of the small drops used.

Moreover, in the present embodiment, the above description has been given of the slanting line with the one-fourth inclination. The same discussion is applicable to the other slanting lines with a different inclination similarly, and also to those subjected to mirroring of the same and those rotated by 270 degrees, 180 degrees or 90 degrees.

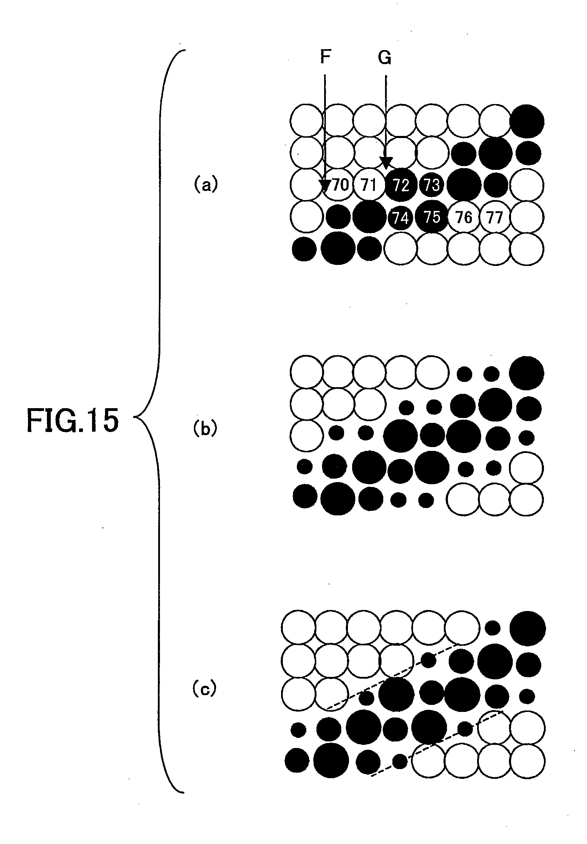

Furthermore, the case in which the number of the dots which form the straight line between two step-change parts (F, G) in the slanting line which performed half-tone processing which uses the ratio of 50% for each of the large and middle drops is 2 (the slanting line with 1/2 inclination) is shown in FIG. 15 (a).

In this case, if the two drops of small drops are added to the blank of the changing point, it can add to the same position (namely, the next changing point) as the image dot which forms the slanting line, and the stairs-like image cannot be improved (b).

Then, in the present invention, in order to solve this, in such a case, it is supposed that it is about the addition range of the small drop to the 1-pixel this side of the changing point (namely, number-1 of the dot which forms the straight line between step-change parts) (c).

The slanting which inclined by this and has improved jaggies also with one half of the slanting line comes to be obtained.

In addition, although this embodiment described the case in half-tone processing of the ratio of 50% of each of the large and middle drops, in the half-tone processing which uses the large and middle drops, all can be similarly carried out about the case of the ratio of the large and middle drops, and the case of the ratio which serves as the middle drop >= small drop by the half-tone processing which used the minor drop. That is, it can carry out similarly about the case where the number of the dots of the middle drop is larger than the number of the dots of the small drop.

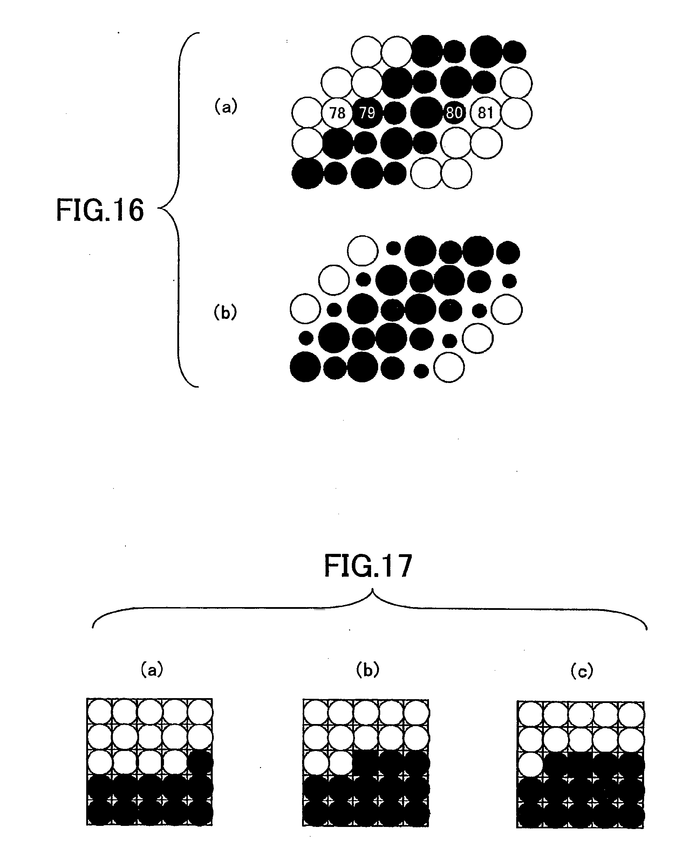

Furthermore, the example in case the number of the dots which form the straight line between two step-change parts in the slanting line which performed half-tone processing which includes the 50% of each of the large and middle drops with FIG. 16 is 1 (slanting of inclination 1/1) is shown (a).

In this case, if the small drop is added, it will become the same slanting as the image dot which forms the slanting line, and the width of the line will become thick.

In the present invention, in order to solve this, when jaggies cannot be conspicuous easily since the stairs-like portion continues, the small drop is not added to the tendency for the stairs-like portion to be relaxed by the spread of the ink and the blot of some it.

The undesired influence by this inclining and carrying out jaggies addition with 1/1 of the slanting line can be lost.

In addition, although this embodiment described the case in half-tone processing of the ratio of 50% of each of the large and middle drops, in the half-tone processing which uses the large and middle drops, all can be similarly carried out about the case of the ratio of the large drop and the middle drop, and the case of the ratio which serves as the middle drop >= small drop by the half-tone processing which used the minor drop.

That is, it can carry out similarly about the case where the number of the dots of the middle drop is larger than the number of the dots of the small drop.

Furthermore, the example in case the number of the dots which form the straight line between two step-change parts in the slanting line which performed half-tone processing which includes the 100% of small drops with FIG. 18 is 4 (slanting of inclination 1/4) is shown (a).

In this case, if the small drop is added, it cannot become the same slanting as the image dot which forms the slanting line, and the stairs-like image cannot be improved.

In the present invention, since the slanting line which includes small drops from the first in order to solve this has low concentration, jaggies cannot be conspicuous easily, and when it is the ink-jet printer, it does not add the small drop to the tendency for the stairs-like portion to be relaxed by the spread of the ink and the blot of some.

The unnecessary load to the host computer by carrying out jaggies addition with the slanting line which performed half-tone processing which includes the 100% of small drops by this similarly can be lost.

In addition, although this embodiment described the slanting line which performed half-tone processing which includes the 100% of small drops, the ratio of the small and middle drops in half-tone processing.

It can carry out similarly about the case where it becomes the middle drop < small drop. That is, it can carry out similarly about the case where there are more dots of the small drop than the number of the dots of the middle drop.

In the present embodiment, the above description has been given of the slanting line with the one-fourth inclination. However, the same discussion is applicable to other slanting lines with a different inclination similarly, and also to those subjected to mirroring of the same and those rotated by 270 degrees, 180 degrees or 90 degrees.

As mentioned above, the optimal jaggies correction for each respective inclinations can be attained by selecting one of the different jaggies correction methods according to the inclination of the slanting line or the level of gradation of the half-tone processing.

Next, a description will be given of a method of forming the small drop to the changing point of the step-change part of the image outline.

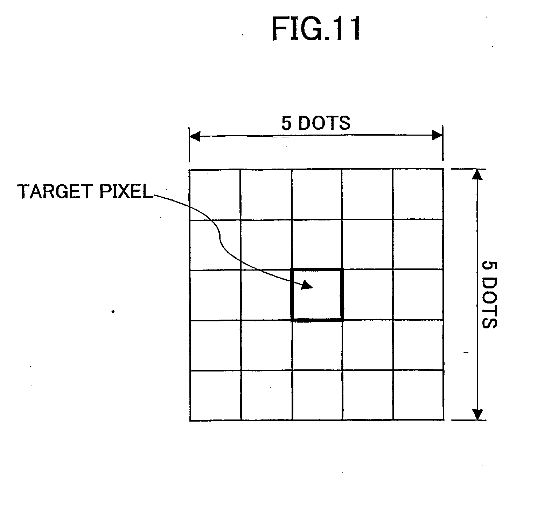

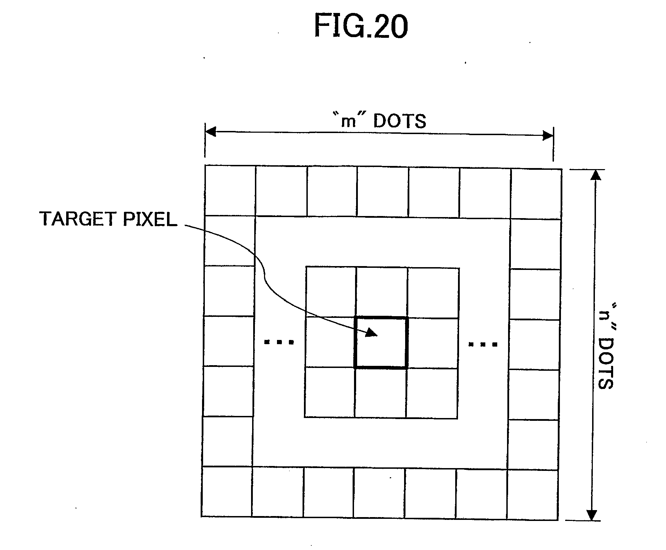

As a method of adding or replacing the small drop, pattern matching is used as an excellent method. FIG. 20 shows the example of the window used for pattern matching. This window is provided with the size of width m and length n (m x n). The following explanation will be given for the case in which the window size of m= 5 and n= 5 is used (FIG. 11).

The font data which is not yet subjected to half-tone processing is developed to bitmap data by the printer driver software. This bitmap data represents the dots which form the font. Pattern matching is carried out for each bit of the bitmap data derived from the font data on the basis of the size of the above-mentioned window.

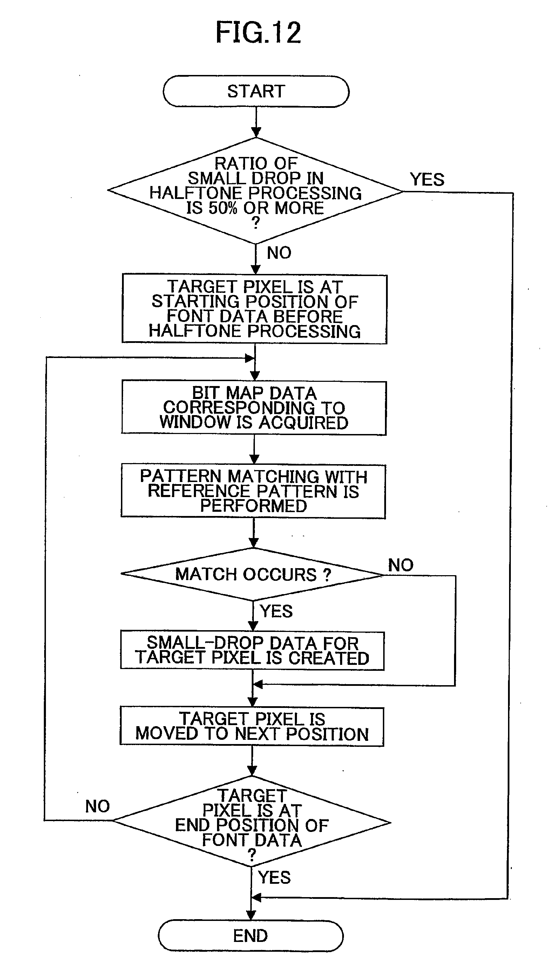

FIG. 12 is a flowchart for explaining the processing of the pattern matching described above.

First, it is determined whether the ratio of the small drop used in the half-tone processing is 50% or more. If the result is affirmative, the processing ends. If the result is negative, the control is transferred to next step.

Next, the target pixel is set at the starting position of font data before the half-tone processing. By taking into consideration the target pixel, the bitmap data of the font data equivalent to the window is acquired. In this case, the acquired bitmap data is the dot data for 25 (= 5 x 5) dots.

Next, the pattern matching is performed so that the acquired data is compared with the data of the predetermined pattern (called the reference pattern) which is used to add or replace the small drop. When a match in the pattern matching occurs, the target pixel is replaced by the data indicating the small drop. The processing may be performed such that one pixel is represented by one byte of the data or one bit of the data.

When one pixel is represented by one byte, 25 bytes of the data are needed to express the data for 25 dots. When one pixel is represented by one bit, only the amount of data of 4 bytes is needed to express the data for 25 dots (when the processing is performed only for the data other than the target pixel, only the data of 3 bytes is need), the amount of the data being processed is smaller for the case of the 1-bit data processing. Since saving of the memory and improvement of the processing speed can be attained, the latter method is desirable.

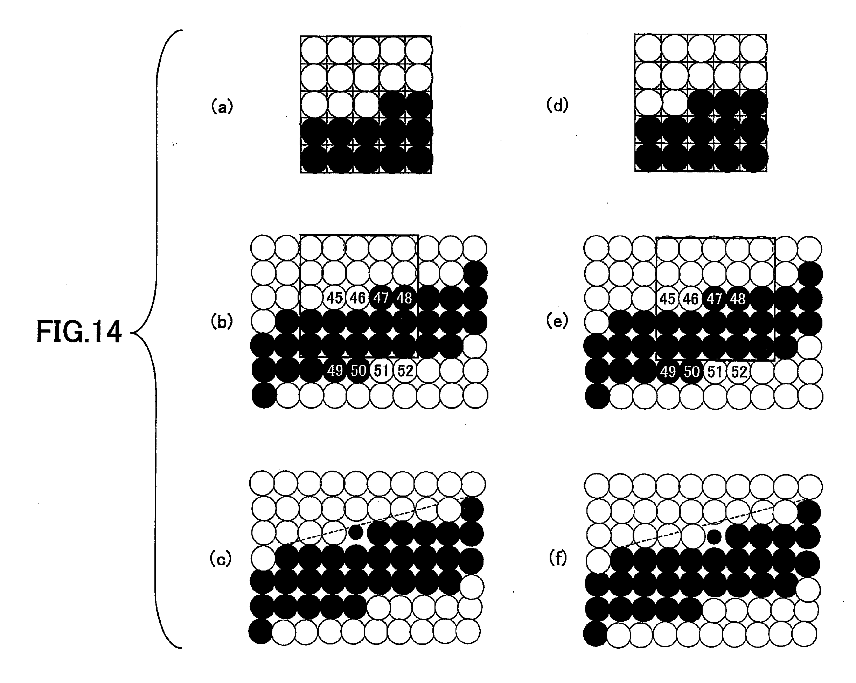

FIG. 14 shows the details of the processing of the pattern matching. It is in the state of the window when FIG. 14 (a) makes 46 of font data as the reference pattern and (b) makes it the target pixel. Since the pattern of both dot is in agreement, the position of the target pixel 46 is replaced by the small drop from the blank (c).

The data in which the small drop is shown in the creation of small drop data. When the original font data is expressed with 0 (blank) and 255 (printing data) like bitmap data, or when are expressed with the two values like 0 (blank) and 1 (printing data) and it once transforms like 0 (blank) and 255 (printing data), you may replace the data itself which forms blank data and the font by the data (for example, respectively 85) showing the small drop.

Moreover, what is necessary is to prepare the memory (memory for small drop data), and just to create 1 which expresses printing data to position where the same size as font data is another, and which attaches the small drop in it, when processing with 0 and 1.

The slanting with which jaggies like FIG. 8 have been improved is realizable by printing (the case of the latter), the small drop, and the large drop by the font data (in the case of the former) which consisted of the data in which the small drop which created by pattern matching, and the large drop are shown or the binary (0 1) data for small drops, and the original the binary (0 1) font data.

By using the window and reference pattern of 5x5, judgment whether it replaces by the small drop to the blank of the 2 dots and the image dot approximately focusing on the changing point is attained.

For example, the position of 45 can replace by the small drop with the reference pattern of FIG. 17 (a). The dot of 48 is similarly replaced for 47 by the small drop by FIG. 17 (b) by (c).

It is because the reason which can be carried out cannot detect the changing point by receiving the 2 dots before and after the changing point since the changing point is judging the target pixel out of the window in the position of for example, FIG. 14 window.

In canceling this and adding the suitable small drop, it becomes possible by making the window and the reference pattern into the size of 7 x 7.

That is, by enlarging the size of the window, and the size of the reference pattern, the changing point of the level or perpendicularly near slanting can be detected, it becomes possible to add the small drop according to the inclination, and those slanting quality can be made much more the optimal.

That is, it is decided by how far the size of the window and the reference pattern needs to carry out displacement not only to what is used in this embodiment but the small drop, or whether processing time does to printing velocity.

Since the data which carries out pattern matching will become large if this size becomes large, the pattern matching is time consuming. Therefore, from processing time, the smaller possible one as the size is desirable.

On the other hand, before and after the changing point, since it is decided in how many dots whether the small drop should be carried out from the character quality by jaggies correction, it is necessary to determine the optimal size as processing velocity from character quality.

When the above ink was used by the experiment of the present-invention person, as for reduction of unevenness with the contiguity dot by the spread of the ink, it turns out also by small drop addition of the 7 or less dots that improvement in character quality can be aimed at enough, and processing velocity also showed that the throughput 10 ppm or more could be attained. Therefore, as the size of the window, the size of m<=7 or n<=7 is suitable.

Moreover, when the window of the same size is used, about the point of processing velocity to the embodiment (FIG. 8 (a) - (e)), FIG. 8 (a) are the quickest and become late in order of (b), (c), (d), and (e).

The processing method compares what to perform pattern matching to one, only when the target pixel is blank and (a) and (b) is (c) image dots, and this is the case where it is blank in (d) and (e), and in the case of both the image dot (that is, it is because all font data needs to perform pattern matching). In other words, the font data which has improved jaggies at high speed can be created by accepting it blank and adding the small drop.

Moreover, the font data which has improved jaggies at high speed can be created by replacing only the image dot by the small drop.

As the second, the number of required reference patterns is for increasing in order of (a), ((b) = (c)), (d), and (e). In order to carry out (b), this needs the reference pattern which judges the second dot of the blank further for the reference pattern of (a), and the reference pattern which judges the first dot further is required for it in (d), and it is because the reference pattern for judging the second dot further is needed in (e).

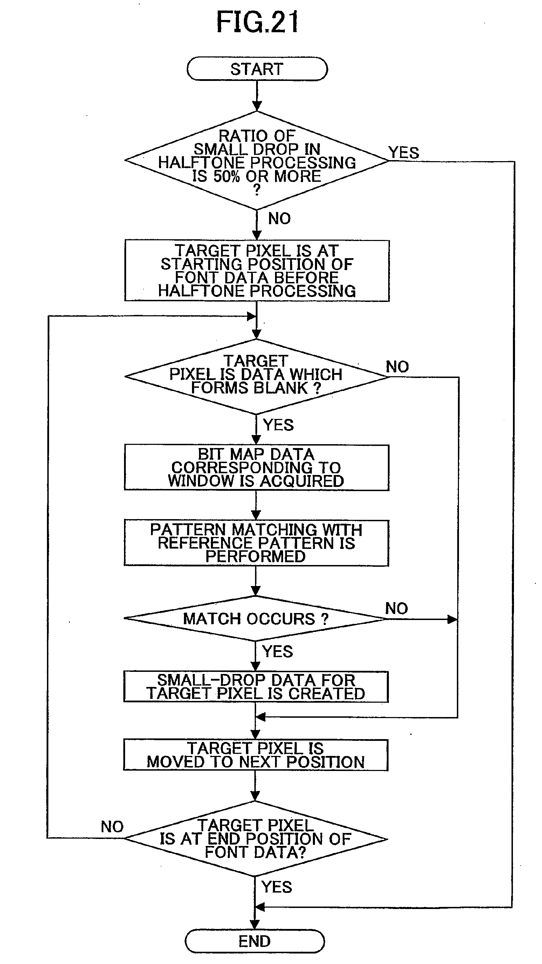

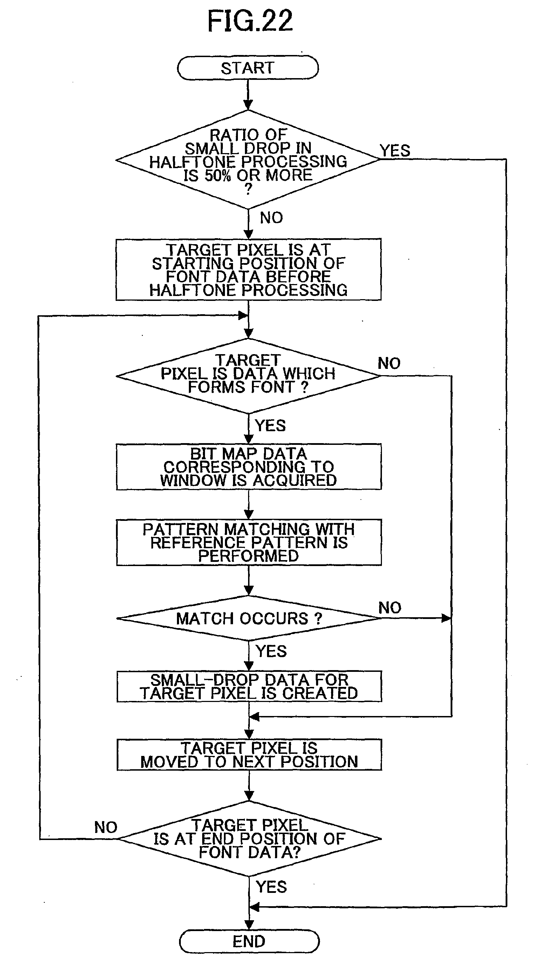

Here, how to perform small drop addition processing only to the dot which forms the image for how FIG. 21 performs addition processing of the small drop only in the blank part with FIG. 22 is described.

How to add the small drop only to the blank part is described. The flowchart is shown in FIG. 21.

First, the target pixel is set at the starting position of font data. The image data to the target pixel is seen and the data (data of which = printing is done) with which the data forms the blank data or the font is judged.

Subsequently, the following pattern matching is carried out only at the time of the data in which the blank is shown, and, in the case of the data which forms the font, the changing point by pattern matching is not detected.

Since time to carry out pattern matching by this by the data which forms the font is lost, improvement in processing velocity can be aimed at.

The bitmap data of the font data equivalent to the window is acquired focusing on the target pixel at the time of the data in which the blank is shown. Therefore, the acquired bitmap data is the data for the 25 dots of 5 x 5.

When the acquired data is compared with the data of the pattern (henceforth the reference pattern) which adds or replaces the small drop set up beforehand and being matched by pattern matching, the target pixel is replaced by the data in which the small drop is shown.

These processings may treat the 1 pixel as the 1 byte of the data, and may treat it as the 1-bit data. When treating as the 1-bit data to the 25 bytes being required expressing the data for the 25 dots when treating as the 1 byte of the data.

Since it ends with the amount of data of the 4 bytes (it is desirable at the 3 bytes when carrying out only to the data other than the target pixel) to express the data for the 25 dots, the number of the data which the way treated as the 1-bit data processes is small, and since saving of the memory and improvement in processing velocity can be aimed at, it is desirable.

FIG. 14 explains the example of pattern matching still in detail.

It is in the state of the window when FIG. 14 (a) makes 46 of font data as the reference pattern and (b) makes it the target pixel. Since the pattern of both dot is in agreement, the position of the target pixel 46 is replaced by the small drop from the blank (c).

By using the window and reference pattern of 5 x 5, judgment whether the small drop is added to the image dot of the blank 2 which adjoins the changing point is attained.

Next, how to replace only the data (= printing data) which forms the font by the small drop is described.

The flowchart is shown in FIG. 22. First, the target pixel is set at the starting position of font data.

The image data to the target pixel is checked, and it is determined whether the data forms the blank or the font (printing data).

Subsequently, the following pattern matching is carried out only at the time of the data which forms the font, and, in the case of the data which forms the blank, the changing point by pattern matching is not detected. Since time to carry out pattern matching by this by the data which forms the blank is lost, improvement in processing velocity can be aimed at.

The bitmap data of the font data equivalent to the window is acquired focusing on the target pixel at the time of the data in which the blank is shown. Therefore, the acquired bitmap data is the data for the 25 dots of 5 x 5.

When the acquired data is compared with the data of the pattern (henceforth the reference pattern) which adds or replaces the small drop set up beforehand and being matched by pattern matching, the target pixel is replaced by the data in which the small drop is shown.

These processings may treat the 1 pixel as the 1 byte of the data, and may treat it as the 1-bit data. When treating as the 1-bit data to the 25 bytes being required expressing the data for the 25 dots when treating as the 1 byte of the data.

Since it ends with the amount of data of the 4 bytes (it is desirable at the 3 bytes when carrying out only to the data other than the target pixel) to express the data for the 25 dots, the number of the data which the way treated as the 1-bit data processes is small, and since saving of the memory and improvement in processing velocity can be aimed at, it is desirable.

FIG. 14 explains the example of pattern matching still in detail. It is in the state of the window when FIG. 14 (d) makes 47 of font data as the reference pattern and (e) makes it the target pixel.

Since the pattern of both dot is in agreement, the position of the target pixel 47 is replaced by the data in which the small drop is shown from the printing data in which the large drop is shown (f).

By using the window and reference pattern of 5x5, judgment whether it replaces by the small drop to the dot which shows two font data which adjoins the changing point is attained.

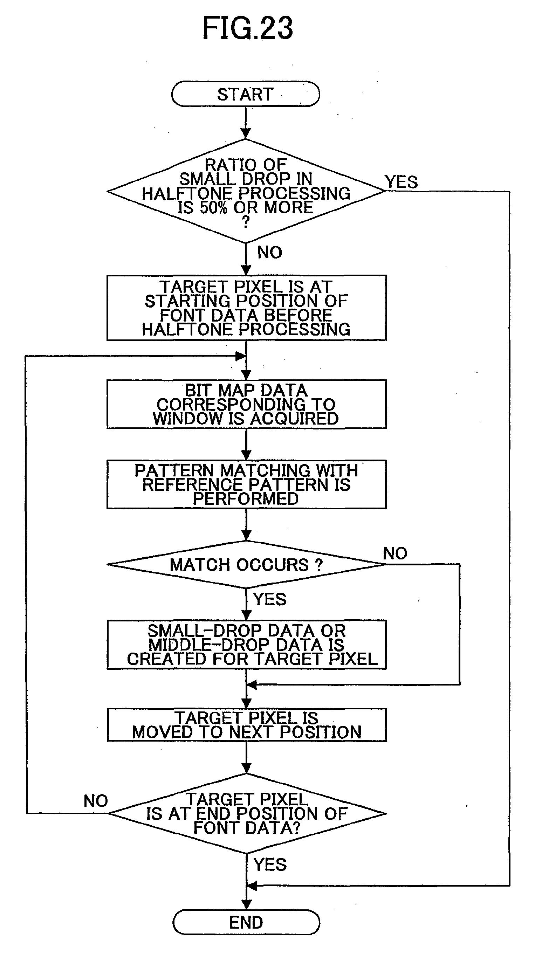

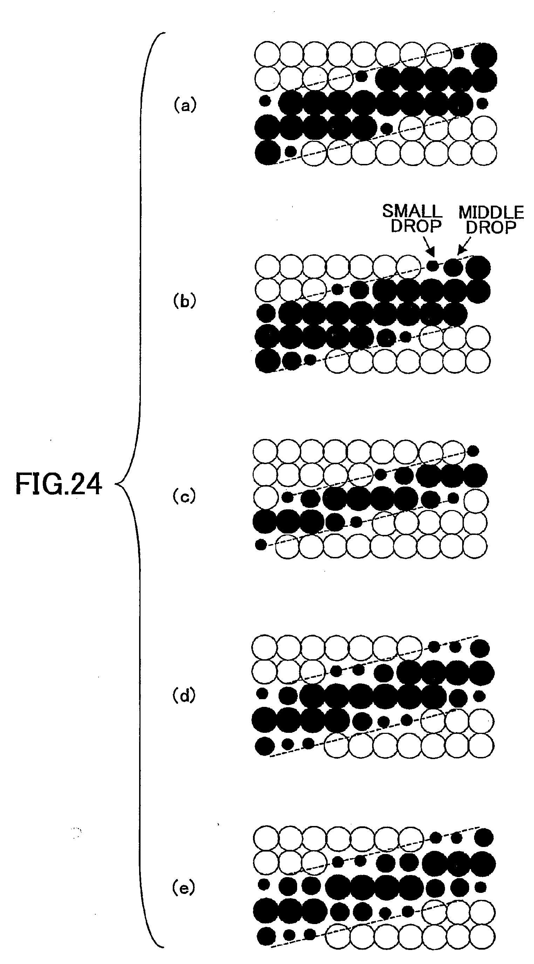

FIG. 23 and FIG. 24 show another embodiment.

Pattern matching is carried out for each bit per the window to the bitmap data as font data.

The flowchart is shown in FIG. 23. First, the target pixel is set at the starting position of font data.

Focusing on the target pixel, the bitmap data of the font data equivalent to the window is acquired. Therefore, the acquired bitmap data is the data for the 25 dots of 5 x 5.

When the acquired data is compared with the data of the pattern (henceforth the reference pattern) which adds or replaces the small drop set up beforehand and the middle drop and being matched by pattern matching, the target pixel is replaced by the data in which the small drop and the middle drop are shown.

These processings may treat the 1 pixel as the 1 byte of the data, and may treat it as the 1-bit data.

When treating as the 1-bit data to the 25 bytes being required expressing the data for the 25 dots when treating as the 1 byte of the data. Since it ends with the amount of data of the 4 bytes (it is desirable at the 3 bytes when carrying out only to the data other than the target pixel) to express the data for the 25 dots, the number of the data which the way treated as the 1-bit data processes is small, and since saving of the memory and improvement in processing velocity can be aimed at, it is desirable.

When the data in which the small drop and the middle drop are shown is expressed with 0 (blank) and 255 (printing data) like bitmap data in the original font data at this time, or when are expressed with the two values like 0 (blank) and 1 (printing data) and it once transforms like 0 (blank) and 255 (printing data), it is possible to replace by the data (for example, respectively 85,170) showing the data itself small drop which forms blank data and the font, and the middle drop.

With the font data (in the case of the former) which consisted of the data in which the small drop which created by pattern matching, the middle drop, and the large drop are shown or the binary (0 1) data for small drops, the binary (0 1) data for middle drops, and the original font data (two values).

The slanting with which jaggies as shown in FIG. 24 have been improved is realizable by printing the small drop, the middle drop, and the large drop.

In addition, although FIG. 24 showed the embodiment in the gradation of 100% of large drops, in the half-tone processing which used the Onaka drop, all can be similarly carried out about the case of the ratio of the Onaka drop, and the case of the ratio which serves as the middle drop >= small drop by the half-tone processing which used the minor drop. That is, it can carry out similarly about the case where the number of the dots of the middle drop is larger than the number of the dots of the small drop.

Next, how to change the correction method by inclination is described.

It is chosen whether the present invention changes the target pixel into the small drop or the middle drop by pattern matching with font data or nothing is carried out. Therefore, it is prepared even for large inclination from inclination small as a pattern to refer to.

Then, what is necessary is just to change the information into what the target pixel is changed, by the pattern in the case of being larger than 1/1, and the pattern of the case of 1/1 or less.

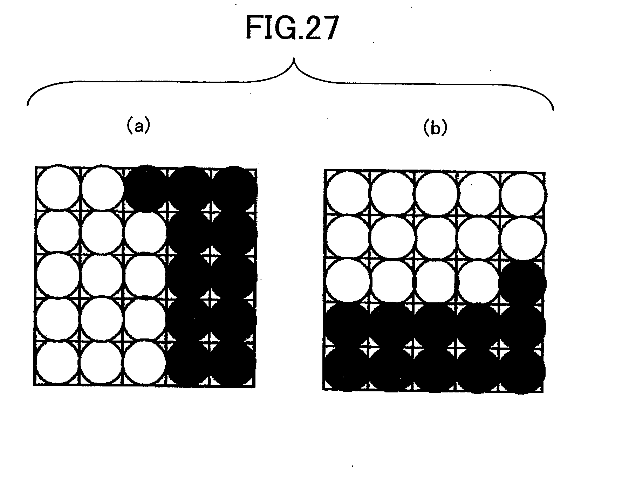

This method is described in more detail with reference to FIG. 27.

FIG. 27 is an example of inclination 4/1 (FIG. 27 (a)) and the reference pattern of 1/4 (FIG. 27 (b)).

When carrying out pattern matching of the font data and being matched by dividing the reference pattern into the reference pattern for the small drop transformation, the reference pattern for middle drops, and the reference pattern that further nothing carries out, and carrying out pattern matching by each, it turns out whether transform the target pixel into the dot of which size, i.e., into which dot data does it transform.

In the example of FIG. 27, it is that the pattern of (a) uses the middle drop and the pattern of (b) as the transformation pattern of the small drop, and transforms into the small drop at the time of the middle drop and inclination 1/4 at the time of inclination 4/1.

Creation of these font data is carried as software called printer driver software on PC for sending the image data to the ink-jet printing device, as mentioned above. Therefore, it is preserved as the software which described the jaggies correction unit at the hard disk of the host computer on CDROM or the network, and operation becomes possible with each PC by installing it.

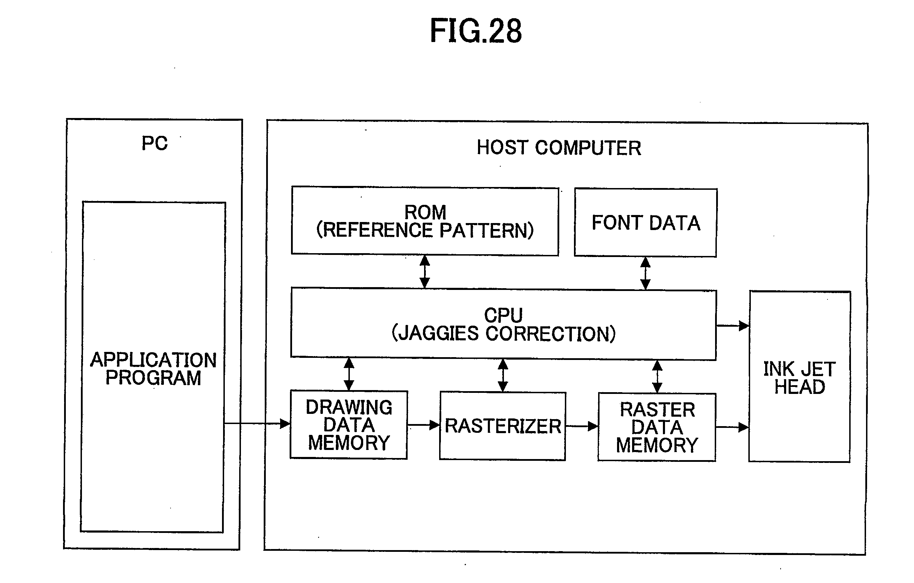

Moreover, there is also the method of carrying the detection unit in the ink-jet printing device itself as another form. When creating bitmap data from the alphabetic code which entered as this method using CPU, for example by putting in the reference pattern for performing the processing method of the jaggies correction, and pattern matching to the program stored in ROM in the case of the firmware which consisted of the ROMs in which the program for moving CPU and it as shown in FIG. 28 was stored, what is necessary is just made to carry out the jaggies correction.

In this case, since detection of the step-change part of the outline part is performed by CPU, CPU serves as the detection unit.

Moreover, as another method, realizing only by hardware is also possible without using CPU.

By doing in this way, about bitmap, since the data transmission between PC and the inkjet printer is desirable without using the data, it becomes the high speed, and improvement in the throughput can be aimed at.

Next, how to print the font data which carried out in this way and was created in the record paper by the ink-jet printing device is described.

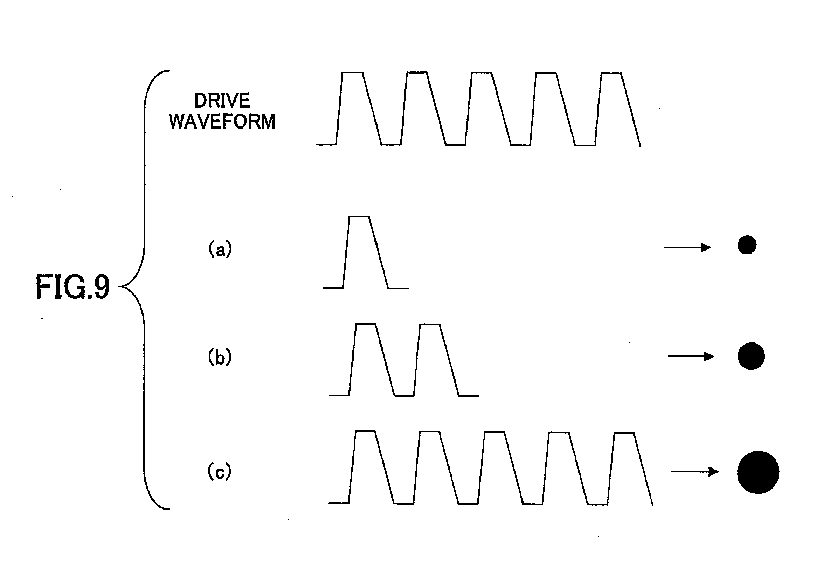

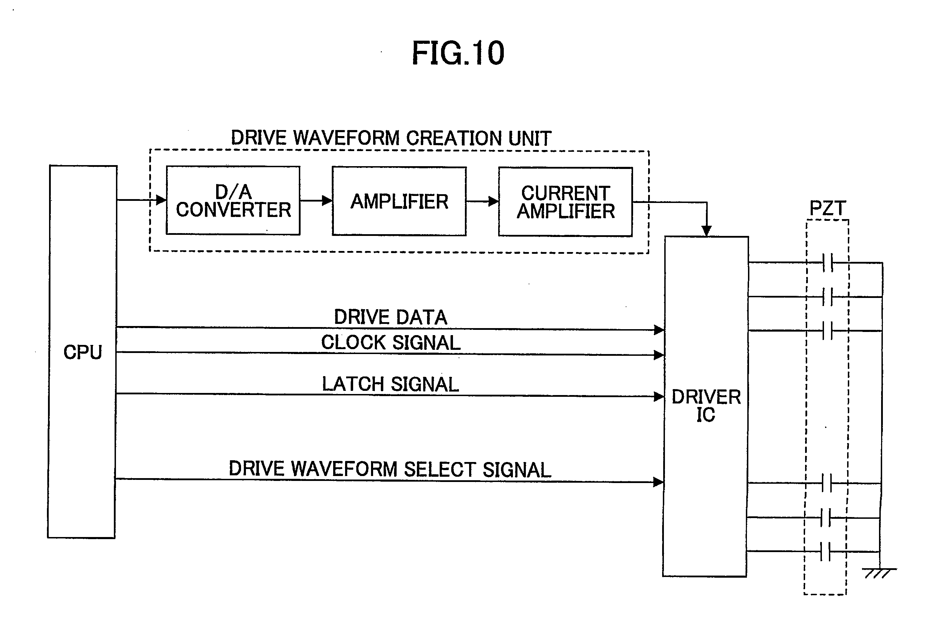

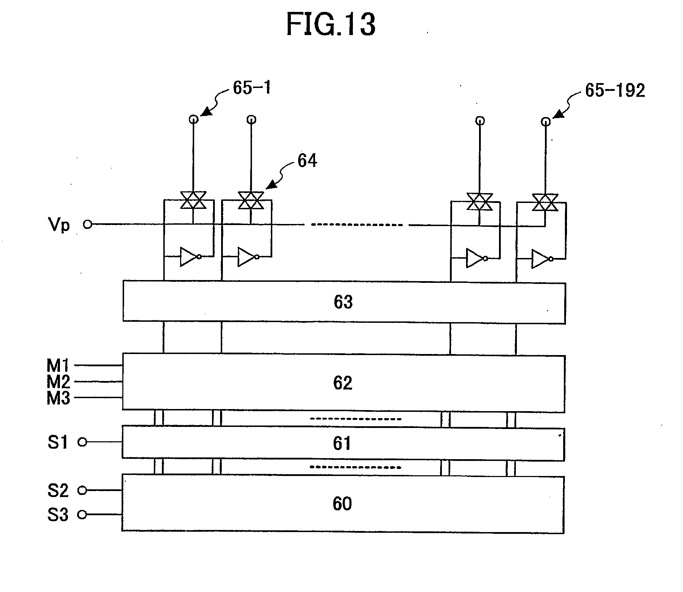

FIG. 9 is a diagram for explaining the drive waveform of the printing head. FIG. 10 shows the example of the composition of the driving circuit of the printing head (which corresponds to the head driving unit 24 of FIG. 4). FIG. 13 shows the example of the composition of the driver IC.

In the data-processing unit 27 of FIG. 4, and the printing control unit 23, the font data as printing data corresponded up to the row of the head, the creation of 2-bit drive data required in order to have desirable control of striking the large drop, the small drop, and the three non-printing values in any direction is performed, and the horizontal transformation and the head are sent to the head drive circuit according to the drive periodicity of the head as drive data S2.

Therefore, as drive data, it becomes the number twice the number of the bits of the channels. As a signal sent to the head drive circuit, in addition, the latch signal S1 for retaining in the latch circuit 61, when it is nothing in the shift register with clock signal S3 for shifting drive data by shift register 60 in driver IC data is assembled the number of the channels. The drive wave pulsing signal (M1-M3) for choosing the drive wave corresponding to the dot (large drop) of the size which forms the image dot for the drive wave, and the drive wave corresponding to the small drop is sent.

On the other hand, transform into the analog signal the drive wave data (digital signal) which the drive wave forms from CPU by the D/A converter as a drive wave creation part which creates the drive wave, and pass further the current amplification machine for supplying enough the amplification machine which amplifies this to actual drive voltage, and the current by the drive of the head the drive wave like FIG. 9 is inputted into pinch off voltage of the driver IC.

In the driver IC, according to drive data, one of the drive wave pulsing signals (M1-M3, logic signal) is chosen by the data selector 62, and it is inputted into the gate of the transmission gate 64 which is the switching unit through the level shifter 63 which transforms the logic signal into the drive voltage level.

Therefore, the transmission gate will be switched according to the length of the selected drive wave pulsing signal, and the wave for small drops (a) as shown in FIG. 9, and the wave for large drops (c) will be outputted to the output terminal (the driver IC of this embodiment 13- 1-192).

Moreover, in this embodiment, the drive wave further for middle drops (b) can be chosen now. According to these waves, PZT drives and can have desirable control of striking the small drop and the large drop in any direction.

In this embodiment, since the object for small drops and the wave for large drops are created from one drive wave, the circuit and signal line which supply the drive wave are desirable at one, and the miniaturization of cost reduction, the circuit board, and the transmission line can be attained.

Thus, the font data to which the small drop is added is actually printed on the plain paper with the ink-jet head on the conditions that are given in the following, and the character quality has been evaluated.
- Head: 384 nozzles/color; nozzle pitch = 84 micrometer (equivalent to 300dpi)
- Image resolution: 300dpi
- Dot size: 120 micrometers of large drops, 40 micrometers of small drops
- Characters: MS Mincho; font size= 6, 10, 12, 20, 30, 50 or 80 points
- Half-tone processing: 50% for each of the large and middle drops, 50% for each of the middle and small drops
- The jaggies correction method: varied by the slanting part inclination (refer to Table 1 below)
- Printing method: the number of the paths (the number of scanning lines to form one line) = 1; the interlace = none
- Paper: Ricoh MyPaper TA

**Table 1:**

| Slanting Part Inclination: | Jaggies Correction Method: |
|---|---|
| 1/1 | No correction |
| 1/2, 2/1 | FIG. 15 (c) |
| 1/3, 3/1 | FIG. 8 (e) |

The evaluation of character quality is made by the comparison of the character which is subjected to the jaggies correction method described above, the character (comparative example 1) which is not subjected to the jaggies correction method completely (i.e., the character printed only with the large drops), and the character (comparative example 2) which is subjected to the correction method of FIG. 8 (e) regardless of the inclination.

Consequently, the character subjected to the jaggies correction method of the present invention shows the best character quality. The comparative example 2 shows the second best character quality and the comparative example 1 shows the worst character quality.

Moreover, according to the preferred embodiment of the invention, no feathering takes place and the character with sufficient image concentration can be obtained.

In the present embodiment, the above description has been given of the example when printed on the plain paper. Alternatively, when printed on the coated paper, the calendered paper, the OHP film, etc., the same effects of the invention can be acquired by applying the image processing of the invention. Moreover, it is possible to select the execution of the jaggies correction method depending on the type of the paper used.

Moreover, in the present embodiment, the above description has been given of the example in which the character is printed by 300dpi. The diameter of the dot which constitutes the character becomes large when the character is printed at a low resolution of 200dpi or 150dpi, and the stairs-like step-change part is further conspicuous. In suc a case, the above embodiment can be applied suitably and the effects of the invention can be also obtained.

However, when the character is printed at a high resolution of 600dpi, 1200dpi or 2400dpi, the number of the dots which constitute the font is large and the dot size becomes small, thus jaggies are not conspicuous. Therefore, in the case of the ink-jet printer which has two or more printing modes with different printing resolutions, it is desirable to prepare the mode in which the jaggies correction method of the invention is carried out, and the mode in which such is not carried out, and to choose one of the two modes according to the resolution, for the purpose of improvement in the throughput.

As a standard of the resolution, generally at the printing resolution of 450dpi or more, the character quality in which jaggies are not conspicuous is obtained. Hence, in the case of the printing resolution of 450dpi or more, it is desirable not to carry out the jaggies correction method of the invention. On the other hand, in the case of the printing resolution of 360dpi or less, it is desirable to carry out the jaggies correction method of the invention. In other words, the processing time can be shortened by detecting the changing point only in the case of the printing resolution of 360dpi or less.

Furthermore, another example will be given below. The font data to which the small drop is added is actually printed on the plain paper with the ink-jet head on the conditions that are given in the following, and the character quality has been evaluated.
- Head: 384 nozzles/color; nozzle pitch = 84 micrometers (equivalent to 300dpi)
- Image resolution: 300dpi
- Dot size: 120 micrometers of large drops, 70 micrometers of middle drops, and 40 micrometers of small drops
- Character font: MS Mincho; font size =6, 10, 12, 20, 30, 50 or 80 points
- Half-tone processing: 50% for each of the large drop and the middle drops; 50% for each of the middle drop and the small drop
- The jaggies correction method: varied depending on the slanting part inclination (refer to Table 2 below).
- Printing method: the number of the paths (the number of scanning lines to form one line)= 1; the interlace = none
- Paper: Ricoh MyPaper TA

**Table 2:**

| Slanting Part Inclination: | Jaggies Correction Method: |
|---|---|
| 1/1 | No correction |
| 1/2, 2/1 | FIG. 15 (c) |
| 1/3, 3/1 | FIG. 24 (e) |

The evaluation of character quality is made by the comparison of the character which is subjected to the jaggies correction method described above, the character (comparative example 1) which is not subjected to the jaggies correction method completely (i.e., the character printed only with the large drops), and the character (comparative example 2) which is subjected to the correction method of FIG. 8 (e) regardless of the inclination.

Consequently, the character subjected to the jaggies correction method of the present invention shows the best character quality. The comparative example 2 shows the second best character quality and the comparative example 1 shows the worst character quality.

Moreover, according to the preferred embodiment of the invention, no feathering takes place and the character with sufficient image concentration can be obtained.

In the present embodiment, the above description has been given of the example when printed on the plain paper. Alternatively, when printed on the coated paper, the calendered paper, the OHP film, etc., the same effects of the invention can be acquired by applying the image processing of the invention. Moreover, it is possible to select the execution of the jaggies correction method depending on the type of the paper used.

Moreover, in the present embodiment, the above description has been given of the example in which the character is printed by 300dpi. The diameter of the dot which constitutes the character becomes large when the character is printed at a low resolution of 200dpi or 150dpi, and the stairs-like step-change part is further conspicuous. In suc a case, the above embodiment can be applied suitably and the effects of the invention can be also obtained.

However, when the character is printed at a high resolution of 600dpi, 1200dpi or 2400dpi, the number of the dots which constitute the font is large and the dot size becomes small, thus jaggies are not conspicuous. Therefore, in the case of the ink-jet printer which has two or more printing modes with different printing resolutions, it is desirable to prepare the mode in which the jaggies correction method of the invention is carried out, and the mode in which such is not carried out, and to choose one of the two modes according to the resolution, for the purpose of improvement in the throughput.

As a standard of the resolution, generally at the printing resolution of 450dpi or more, the character quality in which jaggies are not conspicuous is obtained. Hence, in the case of the printing resolution of 450dpi or more, it is desirable not to carry out the jaggies correction method of the invention. On the other hand, in the case of the printing resolution of 360dpi or less, it is desirable to carry out the jaggies correction method of the invention. In other words, the processing time can be shortened by detecting the changing point only in the case of the printing resolution of 360dpi or less.

Next, another embodiment will be described below. Since the formation time of the dot differs when the dot size is varied by using the ink-jet printing device as described above with FIG. 9, the difference arises in the timing at which the dot is discharged from the head. That is, the time from the input of the driving pulse to the discharge of the small drop is smallest since the drive time of the small drop is shortest. The time for discharging the large drop is largest since the drive time of the large drop is slowest.

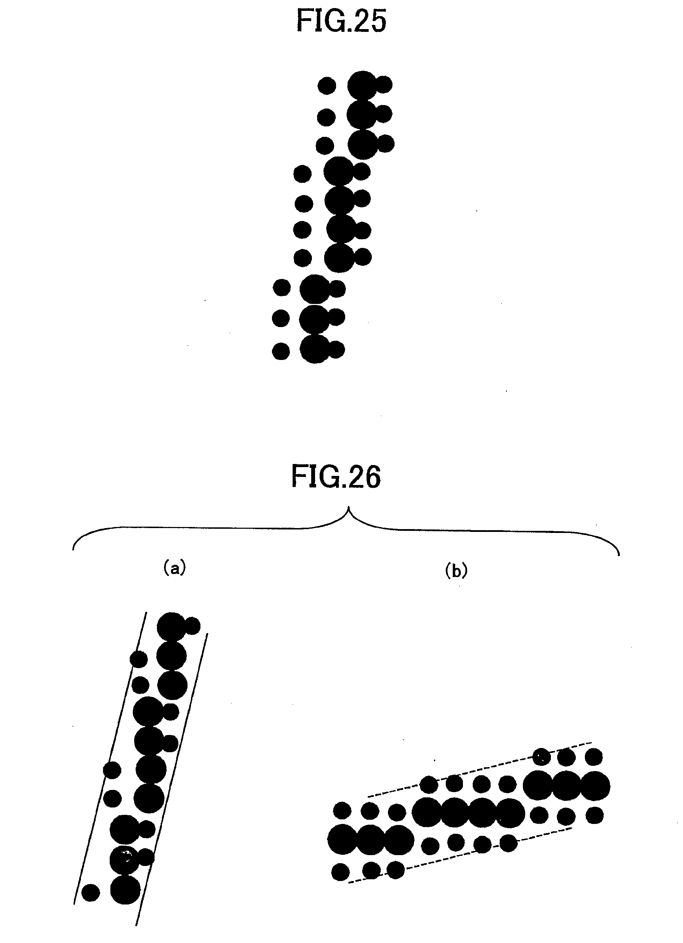

For this reason, when changing the dot size and correcting jaggies, as shown in FIG. 25, with the slanting line with large inclination, the problem that the small drop for the correction is separated arises.

Usually, the ink-jet printing device is designed so that the discharge velocity (Vj) of the drop is preferably 5 m/s or more (more preferably 7 m/s or more). Therefore, although it does not become so large gap, gap of about 10-20 micrometers will be produced. For this reason, it is remarkable with the slanting line with larger inclination than 1/1 that the small drop is isolated and it is visible, and since the large drop which constitutes the character in 1/1 or less inclination is met and the small drop is formed, it is not so much conspicuous.

The present invention is made in consideration of the point, is changing the jaggies correction method by inclination, and offers the optimal correction method which was compatible with reduction of the influence of gap of the dot position in the jaggies correction effect.

When the example of the correction method is described, if it is made like, the thing which correct using the small drop in 1/1 or less inclination (FIG. 26(a) correction method), and corrects in the middle drop instead of the small drop, for example when larger than inclination 1/1 (FIG. 26(b) correction method) and which is shifted so much will not have the dot position.

Moreover, in 1/1 or less inclination, it corrects like FIG. 8 (e), using only the small drop as another embodiment, and when larger than inclination 1/1, as shown in FIG. 22 (e), you may be made to correct in the small drop and the middle drop.

Moreover, as another embodiment, as shown in FIG. 8 (e) at the time of 1/1 or less inclination, it is also possible to correct the 2 dots (namely, number of correction dots = 4) before and after the changing point, and to correct the 1 dot of upper and lower sides of the changing point, when larger than inclination 1/1.

The position it becomes possible to choose the optimal with the number of small drops, and is not based on inclination, but desirable image quality is obtained.

As mentioned above, since according to the preferred embodiment of the present invention the dot which forms the outline is detected and the jaggies correction method was chosen, when half-tone processing was not performed in the character which performed half-tone processing Moreover, since the jaggies correction method was chosen according to inclination of the slanting line part.

Also in the character which did not say that the character grew fat or jaggies were conspicuous on the contrary, and performed half-tone processing by small dot which is seen with the slanting line of 1/1, 1/2, and 2/1, and which is corrected, the always optimal jaggies correction is realizable.

In that case, since the jaggies correction method is chosen according to the level of half-tone gradation, the unnecessary load on the host computer is eliminated and the optimal jaggies correction can be realized.

The ink used according to the invention is composed of at least pure ware, the pigment, the wetting agent, the polyol or glycol ether with carbon number of eight or more, the anionic or nonionic surface active agent, the water-soluble organic solvent, and the pigment concentration is larger than 6wt% and the ink viscosity is larger than 8cp(s) at 25 degrees C.

The desirable color tone when usually printing in the paper (it has sufficient coloring characteristic and color-reproduction characteristic), high image concentration, the clear quality of image which has neither the feathering phenomenon nor the color bleeding phenomenon in the character and the image,

The image with few ink strike-through phenomena which can be equal also to double-sided printing, the high ink dryness characteristic suitable for high-speed printing (fixing characteristic),

The desirable image of character quality and slanting quality can be obtained by forming the step-change part circumference of the dot which realized high solidity, such as the light resistance and durability, upwards, and forms the character and the outline part of the graphics image further by the dot of the small size, and correcting the step-change part.

Moreover, since the quality character could be printed also in low resolution, the image could be formed by 1 path non-interlaced, and improvement in printing speed has been realized.

Moreover, since the step-change part of binary images is detected and it was made to create the dot data of the small size as a method of adding the small size according to the result, the certain and optimal small drop addition is attained and character quality can be improved.

Moreover, gap of the dot position by the time difference produced at the time of the formation of the small drop and the large drop appears notably at the time of larger inclination than 1/1, without becoming rather inferior character quality by performing the jaggies correction, the slanting line of all inclination can perform the optimal correction and improvement in character quality can be aimed at by this.

Thus, according to the preferred embodiment of the present invention mentioned above, by the ink-jet printing device, while realizing high-speed record, image quality can be improved and the ink-jet printing device which reduced the step-change part of the shape of stairs of the outline in the character which performed especially half-tone processing can be offered.

Furthermore, the printing on the plain paper is performed by using the ink which is composed of the pure water, the pigment, the water-soluble organic solvent, and the polyol or glycol ether with carbon number of eight or more, and it is possible for the present invention to provide the following advantageous features:
- the desirable color tone (which has sufficient coloring characteristic and color-reproduction characteristic);
- high image concentration;
- clear quality of image which has neither the feathering phenomenon nor the color bleeding phenomenon in the character and the image;
- the image which withstands double-sided printing with decreased ink strike-through phenomena;
- high ink dryness characteristic suitable for high-speed printing (fixing characteristic);
- high-quality image with high solidity characteristics, such as light resistance and durability.

Moreover, it is possible to provide an ink-jet printing device and its image-processing method which provides high character quality in low resolution printing (400dpi or less).

The present invention is not limited to the above-described embodiments and variations and modifications may be made without departing from the scope of the invention. For example, the image forming apparatuses to which the present invention is applied may be various kinds of image forming devices, such as printer, copier, and facsimile.

Further, the present application is based on Japanese patent application No. 2003-434867, filed on December 26, 2003.

## Claims

1. An image-processing method for performing image-formation through an inkjet printing method, comprising the steps of:
detecting dots forming a step-change part of an outline of a half-tone image of characters and/or graphics; and
transforming dots surrounding the dots forming the step-change part detected in the detecting step;
wherein one of different transformation methods is selected according to an inclination of the outline of the half-tone image prior to the transforming step in order to produce the dot data in the transforming step;
**characterised in that**:
the transforming step comprises transforming dots surrounding the dots forming the step-change part detected in the detecting step into respective dot data each having a size that is smaller than a size of the detected dots forming the step-change part;
wherein the half-tone image prior to the transforming step comprises first dots of a first size and second dots of a second size smaller than the first size; and
wherein the selection of one of the different transformation methods is also based on whether the number of the first dots in the entire half-tone image is smaller than the number of the second dots in the entire half-tone image.

2. The image-processing method according to claim 1 wherein in the transforming step the dot data having the smaller size is added to a blank part of the dots forming the step-change part.

3. The image processing method according to claim 1 wherein in the transforming step the dot data having the smaller size is added to a font data part of the dots forming the step-change part.

4. The image-processing method according to claim 1 wherein the different transformation methods in the transforming step are different in the size of the dot data produced in the transforming step.

5. The image-processing method according to claim 1 wherein the first dots and the second dots form the step-change part of the outline of the half-tone image.

6. The image-processing method according to claim 1 wherein the different transformation methods in the transforming step are different in a level of gradation of the dot data produced in the transferring step.

7. An image-processing apparatus (27) for performing image-formation through an ink-jet printing method, comprising:
a detection unit detecting dots forming a step-change part of an outline of a half-tone image of characters and/or graphics; and
a transformation unit configured to transform dots surrounding the dots forming the step-change part detected by the detection unit;
wherein the transformation unit is provided to select one of different transformation methods according to an inclination of the outline of the half-tone image prior to the transformation in order to produce the dot data by the transformation unit;
**characterised in that**:
the transformation unit is configured to transform dots surrounding the dots forming the step-change part detected by the detection unit into respective dot data each having a size that is smaller than a size of the detected dots forming the step-change part;
wherein the half-tone image prior to the transformation comprises first dots of a first size and second dots of a second size smaller than the first size; and
wherein the transformation unit is provided to select the one of the different transformation methods also based on whether the number of the first dots in the half-tone image is smaller than the number of the second dots in the half-tone image.

8. An image-forming apparatus including an image-formation unit forming an image on a recording paper (7) through the ink-jet printing method, and a recording-paper conveyance unit (11) configured to convey the recording paper, the image formation unit comprising the image-processing apparatus according to claim 7.

9. The image forming apparatus according to claim 8, wherein the image formation unit is configured to form the image on the recording paper using an ink which is composed of at least pure water, a pigment, a water-soluble organic solvent, and a polyol or glycol ether with carbon number of eight or more.

10. The image forming apparatus according to claim 8, wherein the image formation unit is configured to form the image on the recording paper using an ink which is composed of at least pure water, a pigment, a wetting agent, an anionic or nonionic surface active agent, a water-soluble organic solvent, and a polyol or glycol ether with carbon number of eight or more, wherein the ink has a pigment concentration of 6 %wt or more and an ink viscosity of 8 cp or more at 25 degrees C.

## Patentansprüche

1. Bildverarbeitungsverfahren zum Ausführen einer Bilderzeugung durch ein Tintenstrahldruckverfahren, wobei das Verfahren die folgenden Schritte umfasst:
Detektieren von Punkten, die einen Stufenänderungsteil eines Umrisses eines Halbtonbilds von Zeichen und/oder Graphik bilden; und
Umwandeln von Punkten, die die Punkte umgeben, die den in dem Detektionsschritt detektierten Stufenänderungsteil bilden;
wobei in Übereinstimmung mit einer Neigung des Umrisses des Halbtonbilds vor dem Umwandlungsschritt eines von verschiedenen Umwandlungsverfahren gewählt wird, um die Punktdaten in dem Umwandlungsschritt zu erzeugen;
**dadurch gekennzeichnet, dass**
der Umwandlungsschritt das Umwandeln von Punkten, die die Punkte, die den in dem Detektionsschritt detektierten Stufenänderungsteil bilden, umgeben, in jeweilige Punktdaten, die jeweils eine kleinere Größe als eine Größe der detektierten Punkte, die den Stufenänderungsteil bilden, aufweisen, umfasst;
wobei das Halbtonbild vor dem Umwandlungsaschritt erste Punkte mit einer ersten Größe und zweite Punkte mit einer zweiten Größe, die kleiner als die erste Größe ist, umfasst; und
wobei die Auswahl eines der verschiedenen Umwandlungsverfahren außerdem darauf beruht, ob die Anzahl der ersten Punkte in dem gesamten Halbtonbild kleiner als die Anzahl der zweiten Punkte in dem gesamten Halbtonbild ist.

2. Bildverarbeitungsverfahren nach Anspruch 1, wobei die Punktdaten mit der kleineren Größe in dem Umwandlungsschritt zu einem leeren Teil der Punkte, die den Stufenänderungsteil bilden, hinzugefügt werden.

3. Bildverarbeitungsverfahren nach Anspruch 1, wobei die Punktdaten mit der kleineren Größe in dem Umwandlungsschritt zu einem Schriftdatenteil der Punkte, die den Stufenänderungsteil bilden, hinzugefügt werden.

4. Bildverarbeitungsverfahren nach Anspruch 1, wobei sich die verschiedenen Umwandlungsverfahren in dem Umwandlungsschritt in Bezug auf die Größe der in dem Umwandlungsschritt erzeugten Punktdaten unterscheiden.

5. Bildverarbeitungsverfahren nach Anspruch 1, wobei die ersten Punkte und die zweiten Punkte den Stufenänderungsteil des Umrisses des Halbtonbilds bilden.

6. Bildverarbeitungsverfahren nach Anspruch 1, wobei sich die verschiedenen Umwandlungsverfahren in dem Umwandlungsschritt in Bezug auf das Niveau der Gradation der in dem Umwandlungsschritt erzeugten Punktdaten unterscheiden.

7. Bildverarbeitungsvorrichtung (27) zum Ausführen einer Bilderzeugung durch ein Tintenstrahldruckverfahren, wobei die Bildverarbeitungsvorrichtung umfasst:
eine Detektionseinheit, die Punkte, die einen Stufenänderungsteil eines Umrisses eines Halbtonbilds von Zeichen und/oder von Graphik bilden, detektiert; und
eine Umwandlungseinheit, die dafür konfiguriert ist, Punkte, die die Punkte, die den durch die Detektionseinheit detektierten Stufenänderungsteil bilden, umgeben, umzuwandeln;
wobei die Umwandlungseinheit dafür vorgesehen ist, in Übereinstimmung mit einer Neigung des Umrisses des Halbtonbilds vor der Umwandlung eines von verschiedenen Umwandlungsverfahren zu wählen, um durch die Umwandlungseinheit die Punktdaten zu erzeugen;
**dadurch gekennzeichnet, dass**
die Umwandlungseinheit dafür konfiguriert ist, Punkte, die die Punkte, die den durch die Detektionseinheit detektierten Stufenänderungsteil bilden, umgeben, in jeweilige Punktdaten, die jeweils eine kleinere Größe als eine Größe der detektierten Punkte, die den Stufenänderungsteil bilden, aufweisen, umzuwandeln;
wobei das Halbtonbild vor der Umwandlung erste Punkte mit einer ersten Größe und zweite Punkte mit einer zweiten Größe, die kleiner als die erste Größe ist, umfasst; und
wobei die Umwandlungseinheit vorgesehen ist, um das eine der verschiedenen Umwandlungsverfahren außerdem auf Grund dessen zu wählen, ob die Anzahl der ersten Punkte in dem Halbtonbild kleiner als die Anzahl der zweiten Punkte in dem Halbtonbild ist.

8. Bilderzeugungsvorrichtung, die eine Bilderzeugungseinheit, die auf einem Aufzeichnungspapier (7) durch ein Tintenstrahldruckverfahren ein Bild erzeugt, und eine Aufzeichnungspapiertransporteinheit (11), die dafür konfiguriert ist, das Aufzeichnungspapier zu transportieren, enthält, wobei die Bilderzeugungseinheit die Bilderzeugungsvorrichtung nach Anspruch 7 umfasst.

9. Bilderzeugungsvorrichtung nach Anspruch 8, wobei die Bilderzeugungseinheit dafür konfiguriert ist, das Bild auf dem Aufzeichnungspapier unter Verwendung einer Tinte zu erzeugen, die aus Reinwasser und/oder aus einem Pigment und/oder aus einem wasserlöslichen organischen Lösungsmittel und/oder aus einem Polyol- oder Glycolether mit einer Kohlenstoffanzahl von acht oder mehr zusammengesetzt ist.

10. Bilderzeugungsvorrichtung nach Anspruch 8, wobei die Bilderzeugungseinheit dafür konfiguriert ist, das Bild auf dem Aufzeichnungspapier unter Verwendung einer Tinte zu erzeugen, die aus Reinwasser und/oder aus einem Pigment und/oder aus einem Benetzungsmittel und/oder aus einem anionischen oder nichtionischen oberflächenaktiven Stoff und/oder aus einem wasserlöslichen organischen Lösungsmittel und/oder aus einem Polyol- oder Glycolether mit einer Kohlenstoffanzahl von acht oder mehr zusammengesetzt ist, wobei die Tinte eine Pigmentkonzentration von wenigstens 6 Gew.-% und eine Tintenviskosität bei 25 Grad C von wenigstens 8 cp aufweist.

## Revendications

1. Procédé de traitement d'image pour réaliser une formation d'image par un procédé d'impression à jet d'encre, comprenant les étapes :
de détection de points formant une partie de changement par étape d'un contour d'une image en demi-teinte de caractères et/ou de graphiques ; et
de transformation de points entourant les points formant la partie de changement par étape détectés dans l'étape de détection ;
dans lequel un des différents procédés de transformation est choisi selon une inclinaison du contour de l'image en demi-teinte avant l'étape de transformation afin de produire les données de points dans l'étape de transformation ;
**caractérisé en ce que** :
l'étape de transformation comprend la transformation de points entourant les points formant la partie de changement par étape détectés dans l'étape de détection en des données de points respectifs ayant chacun une dimension qui est inférieure à une dimension des points détectés formant la partie de changement par étape ;
dans lequel l'image en demi-teinte avant l'étape de transformation comprend des premiers points d'une première dimension et des seconds points d'une seconde dimension inférieure à la première dimension ; et
dans lequel la sélection d'un des différents procédés de transformation est également basée sur le fait que le nombre des premiers points dans l'image entière en demi-teinte est inférieur au nombre des seconds points dans l'image entière en demi-teinte.

2. Procédé de traitement d'image selon la revendication 1, dans lequel, dans l'étape de transformation, les données de points présentant la dimension plus petite sont ajoutées à une partie blanche des points formant la partie de changement par étape.

3. Procédé de traitement d'image selon la revendication 1, dans lequel, dans l'étape de transformation, les données de points présentant la dimension plus petite sont ajoutées à une partie de données de police de caractères des points formant la partie de changement par étape.

4. Procédé de traitement d'image selon la revendication 1, dans lequel les différents procédés de transformation dans l'étape de transformation sont différents quant à la dimension des données de points produites dans l'étape de transformation.

5. Procédé de traitement d'image selon la revendication 1, dans lequel les premiers points et les seconds points forment la partie de changement par étape du contour de l'image en demi-teinte.

6. Procédé de traitement d'image selon la revendication 1, dans lequel les différents procédés de transformation dans l'étape de transformation sont différents dans un niveau de gradation des données de points produites dans l'étape de transfert.

7. Appareil de traitement d'image (27) pour réaliser une formation d'image par un procédé d'impression à jet d'encre, comprenant :
une unité de détection détectant des points formant une partie de changement par étape d'un contour d'une image en demi-teinte de caractères et/ou de graphiques ; et
une unité de transformation configurée pour transformer des points entourant les points formant la partie de changement par étape détectés par l'unité de détection ;
dans lequel l'unité de transformation est fournie pour choisir un de différents procédés de transformation selon une inclinaison du contour de l'image en demi-teinte avant la transformation afin de produire les données de points par l'unité de transformation ;
**caractérisé en ce que** :
l'unité de transformation est configurée pour transformer des points entourant les points formant la partie de changement par étape détectés par l'unité de détection en des données de points respectifs ayant chacun une dimension qui est inférieure à une dimension des points détectés formant la partie de changement par étape ;
dans lequel l'image en demi-teinte avant la transformation comprend des premiers points d'une première dimension et des seconds points d'une seconde dimension inférieure à la première dimension ; et
dans lequel l'unité de transformation est fournie pour choisir le un des différents procédés de transformation également basée sur le fait que le nombre des premiers points dans l'image en demi-teinte est inférieur au nombre des seconds points dans l'image en demi-teinte.

8. Appareil de formation d'image comprenant une unité de formation d'image formant une image sur un papier d'enregistrement (7) par le procédé d'impression à jet d'encre, et une unité d'acheminement de papier d'enregistrement (11) configurée pour acheminer le papier d'enregistrement, l'unité de formation d'image comprenant l'appareil de traitement d'image selon la revendication 7.

9. Appareil de formation d'image selon la revendication 8, dans lequel l'unité de formation d'image est configurée pour former l'image sur le papier d'enregistrement en utilisant une encre qui est constituée d'au moins d'eau pure, d'un pigment, d'un solvant organique soluble dans l'eau et d'un polyol ou glycol éther avec huit atomes de carbone ou plus.

10. Appareil de formation d'image selon la revendication 8, dans lequel l'unité de formation d'image est configurée pour former l'image sur le papier d'enregistrement en utilisant une encre qui est constituée d'au moins d'eau pure, d'un pigment, d'un agent mouillant, d'un tensioactif anionique ou non ionique, d'un solvant organique soluble dans l'eau, et d'un polyol ou glycol éther avec huit atomes de carbone ou plus, dans lequel l'encre présente une concentration en pigment de 6 % en poids ou supérieure et une viscosité d'encre de 8 cp ou supérieure à 25 degrés C.
